(19) Europäisches Patentamt
European Patent Office
Office européen des brevets

(11) EP 0 709 603 B1

(12) **EUROPEAN PATENT SPECIFICATION**

(45) Date of publication and mention of the grant of the patent:
**05.09.2001 Bulletin 2001/36**

(51) Int Cl.$^7$: **F16H 61/20**, F16H 61/04

(21) Application number: **95116110.8**

(22) Date of filing: **12.10.1995**

# (54) Control system for automatic transmission

Steuerungssystem für Automatikgetriebe

Système de commande pour transmission automatique

(84) Designated Contracting States:
**DE GB**

(30) Priority: **31.10.1994 JP 29057194**

(43) Date of publication of application:
**01.05.1996 Bulletin 1996/18**

(73) Proprietor: **AISIN AW CO., LTD.**
**Anjo-shi Aichi-ken (JP)**

(72) Inventors:
- **Kusafuka, Muneo, c/o Aisin AW Co., Ltd.**
  **Anjo-shi, Aichi-ken, 444-11 (JP)**
- **Mikami, Kazuhiro, c/o Aisin AW Co., Ltd.**
  **Anjo-shi, Aichi-ken, 444-11 (JP)**
- **Yamamoto, Yoshihisa, c/o Aisin AW Co., Ltd.**
  **Anjo-shi, Aichi-ken, 444-11 (JP)**
- **Tsutsui, Hiroshi, c/o Aisin AW Co., Ltd.**
  **Anjo-shi, Aichi-ken, 444-11 (JP)**
- **Iwata, Akihito, c/o Aisin AW Co., Ltd.**
  **Anjo-shi, Aichi-ken, 444-11 (JP)**

(74) Representative: **VOSSIUS & PARTNER**
**Siebertstrasse 4**
**81675 München (DE)**

(56) References cited:
**EP-A- 0 679 819** **US-A- 4 514 811**
**US-A- 4 730 708** **US-A- 4 775 938**
**US-A- 5 272 630** **US-A- 5 301 572**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 709 603 B1

Printed by Jouve, 75001 PARIS (FR)

## Description

The present invention relates to a control system for an automatic transmission.

In the prior art, the automatic transmission is constructed to comprise: a torque converter acting as a fluid transmission unit for receiving the rotation generated by an engine; and a speed change unit for changing the speed of the rotation transmitted from the torque converter. The speed change unit is equipped with a planetary gear unit composed of gear elements so that it changes the speed in accordance with the shift pattern which is set in advance according to the vehicle speed, the throttle opening and so on.

The automatic transmission is enabled to select ranges including a P (parking) range, an R (reverse) range, an N (neutral) range, a D (drive) range, an S (second) range and an L (low) range. If the range is changed from the N-range to the D-range by the shift lever, for example, the rotation of the engine in the idling state is transmitted through the torque converter to the gear change unit, to cause the creep phenomenon that the vehicle runs forward little by little without the accelerator pedal being depressed.

In the prior art, therefore, the creep phenomenon is prevented by releasing a forward clutch, i.e., a first clutch to be applied at the forward running time of the speed change unit (as disclosed in Japanese Patent Laid-Open No. 21458/1986). The release of the first clutch is effected by reducing the oil pressure of the hydraulic servo of the first clutch when one of the D-range, the S-range and the L-range (as will be shortly referred to as the "forward running range") for moving the vehicle forward is selected but the vehicle is substantially stopped.

If the oil pressure to be fed to the hydraulic servo of the first clutch is abruptly boosted in case the first clutch is shifted from a released state to a completely applied state, the engine R.P.M. drops, or a serious engaging shock occurs as the first clutch is applied. On the other hand, if the oil pressure to be fed to the hydraulic servo of the first clutch is gradually boosted, the time period till the end of the application of the first clutch is elongated to cause the engine racing.

Thus, an oil pressure lower than that at the end of the application of the first clutch is fed to the hydraulic servo for a predetermined time period to establish a partially applied state, and the oil pressure is then boosted to end the application of the first clutch.

In this case, the oil pressure for establishing the partially applied state is set by adding a shelf pressure to the oil pressure (as will be referred to as the "base pressure") at the instant when the starting action is detected. This shelf pressure is set to cause neither the engaging shock nor the engine racing.

In the control system for the automatic transmission of the prior art, however, the oil pressure to be fed to the hydraulic servo is fed back and slightly fluctuated so as to hold the released state of the first clutch. As a result, the aforementioned base pressure fluctuates to cause the engaging shock and the engine racing.

For example, if the starting action is made when the first clutch is at a relatively released side in the applied state, the time period for ending the application of the first clutch is elongated because of the low base pressure so that the engine racing occurs. On the other hand, if the starting action is made when the first clutch is at a relatively applied side in the released state, the engaging shock is caused because of the high base pressure. US-5,272,630 discloses an automatic transmission control and strategy for neutral idle with an automatic ratio control wherein provision is made for disengaging a forward-drive clutch, which forms a part of the torque flow path from an engine to the torque input element of multiple-ratio gearing, when the vehicle is stopped and the vehicle engine is idling and wherein provision is made for engaging the clutch to condition the transmission for torque delivery. The engagement is controlled by an electronic microprocessor as part of a closed control loop, thereby minimizing inertia torque disturbances when the clutch is engaged upon the initiation of the vehicle acceleration mode from a standing start.

The present invention contemplates to solve the aforementioned problems of the control system for an automatic transmission of the prior art and has an object to provide a control system for an automatic transmission, which is freed from the engaging shock and the engine racing in the case of a shift from the released state to the completely applied state of a first clutch. This object is achieved with the features of the claims.

When the oil pressure controlled by the control system is fed to the hydraulic servo, the clutch is applied to transmit the rotation of the engine to the speed change unit through the fluid transmission unit and the clutch.

Thus, while the released state of the clutch is established, the oil pressure to be fed to the hydraulic servo can be boosted to bring the clutch to the applied state, if the differential rotation between the input R. P. M. and the output R.P.M. has not changed, but can be reduced to bring the clutch to the released side if the differential rotation has changed.

Moreover, in case the oil pressure to be fed to the hydraulic servo is reduced, the oil pressure before being reduced is used as the base pressure.

As a result, when the driver performs the starting action so that the shift of the vehicle from the stop state to the start state is detected, the shelf pressure, as set to the base pressure, is fed to the hydraulic servo so that the oil pressure is boosted to bring the clutch into the partially applied state.

Subsequently, the oil pressure to be fed to the hydraulic servo is further boosted to bring the clutch into the completely applied state.

In this case, if the oil pressure to be fed to the hydraulic servo is boosted by the pressure boosting means and then reduced by the pressure reducing means, the oil pressure before being reduced is used as the base pressure. When the oil pressure to be fed to the hydraulic servo is boosted by the pressure boosting means and then reduced by the pressure reducing means, the clutch just starts to be applied. Therefore, if the oil pressure before being reduced is used as the base pressure, the oil pressure at the instant of starting the application of the clutch is used as the base pressure.

Thus, the oil pressure at the time of starting the clutch application is used as the base pressure so that the base pressure will not fluctuate to establish the partially applied state of the clutch stably at all times. This makes it possible to prevent the engaging shock and the engine racing.

If the oil temperature is excessively low, for example, the viscous resistance of the oil grows far higher than the ordinary one to cause the dragging resistance. As a result, it may be misjudged that the application of the clutch has been started, despite that the clutch application is not actually started. In this case, the base pressure storage means stores the oil pressure, which is lower than that for the actual start of the clutch application, as the base pressure in the storage unit. As a result, the time period till the end of the clutch application is elongated to cause the engine racing due to the delay in the engagement.

Therefore, if the oil temperature is lower than the set value, the oil pressure, as stored in the storage unit for the ordinary oil temperature, is used as the base pressure.

As a result, it is possible to prevent the engine racing.

Fig. 1 is a block diagram showing the functions of a control system for an automatic transmission according to an embodiment of the present invention;
Fig. 2 is a schematic diagram of an automatic transmission according to the embodiment of the present invention;
Fig. 3 is a diagram tabulating the operations of an automatic transmission according to the embodiment of the present invention;
Fig. 4 is a first diagram showing a hydraulic circuit of the automatic transmission according to the embodiment of the present invention;
Fig. 5 is a second diagram showing a hydraulic circuit of the automatic transmission according to the embodiment of the present invention;
Fig. 6 is a main flow chart showing the operations of the automatic transmission control unit according to the embodiment of the present invention;
Fig. 7 is a first flow chart of an N-D change control routine in the embodiment of the present invention;
Fig. 8 is a second flow chart of the N-D change control routine in the embodiment of the present invention;
Fig. 9 is a diagram illustrating a map of a relation between an input torque and a throttle pressure in the embodiment of the present invention;
Fig. 10 is a diagram illustrating a map of a relation between an engine R.P.M. and a throttle pressure in the embodiment of the present invention;
Fig. 11 is a diagram illustrating a map of a relation between a throttle opening and a throttle pressure in the embodiment of the present invention;
Fig. 12 is a time chart illustrating the N-D change control routine in the embodiment of the present invention;
Fig. 13 is a flow chart of a neutral control subroutine in the embodiment of the present invention;
Fig. 14 is a first flow chart of a first clutch release control subroutine in the embodiment of the present invention;
Fig. 15 is a second flow chart of a first clutch release control subroutine in the embodiment of the present invention;
Fig. 16 is a diagram illustrating relations between an engine R.P.M., and an input torque and a throttle pressure in the embodiment of the present invention;
Fig. 17 is a flow chart of a vehicle speed zero estimate subroutine in the embodiment of the present invention;
Fig. 18 is a first flow chart of an in-neutral control subroutine in the embodiment of the present invention;
Fig. 19 is a second flow chart of an in-neutral control subroutine in the embodiment of the present invention;
Fig. 20 is a diagram illustrating the state of a first clutch in a neutral control state in the embodiment of the present invention;
Fig. 21 is a time chart illustrating an engine R.P. M., a clutch input side R.P.M. and a C-1 oil pressure at a neutral control time in the embodiment of the present invention;
Fig. 22 is a diagram illustrating a relation between a throttle opening and a set value in the embodiment of the present invention;
Fig. 23 is a flow chart of a 1st clutch apply control subroutine in the embodiment of the present invention;
Fig. 24 is a time chart at a starting time in the embodiment of the present invention; and
Fig. 25 is a time chart of an automatic transmission control unit in the embodiment of the present invention.

The present invention will be described in detail in the following in connection with its embodiments with reference to the accompanying drawings.

Fig. 1 is a block diagram showing the functions of a control system for an automatic transmission according to an embodiment of the present invention.

As shown, the automatic transmission is constructed to comprise: a torque converter 12 acting as a fluid transmission unit for transmitting the rotation of an engine 10 to a speed change unit 16; a first clutch C1 acting as a clutch to be applied when a forward running range is selected; a hydraulic servo C-1 for applying the first clutch C1 when fed with the oil pressure; an input R.P.M. sensor 91 for detecting the input R.P.M. of the torque converter 12; an output R.P.M. sensor 92- for detecting the output R.P.M. of the torque converter 12; stop state detection means 93 for detecting the stop state of the vehicle; start state detection means 94 for detecting the shift of the vehicle from the stop state to the start state; and a control unit for controlling the oil pressure to be fed to the hydraulic servo C-1.

The control unit 95 is constructed to include: release state establishing means 951 for establishing the released state of the first clutch C1 by reducing the oil pressure to be fed to the hydraulic servo C-1, when the stop state of the vehicle is detected; and complete apply state establishing means 952 for establishing the completely applied state of the first clutch C1 by boosting the oil pressure to be fed to the hydraulic servo C-1 when the shift of the vehicle from the stop state to the start state is detected.

Moreover, the release state establishing means 951 is composed of: differential rotation calculation means 953 for calculating the differential rotation between the input R.P.M. and the output R.P.M.'; differential rotation change decision means 954 for deciding whether or not the differential rotation has changed; pressure boosting means 955 for boosting the oil pressure to be fed to the hydraulic servo C-1 if it: is decided that the differential rotation has not changed; pressure reducing means 956 for reducing the oil pressure to be fed to the hydraulic servo C-1 if it is decided that the differential rotation has changed; and base pressure storage means 958 for storing a storage unit 957 with the oil pressure before being reduced, as a base pressure, when the oil pressure to be fed to the hydraulic servo C-1 is boosted by the pressure boosting means 955 and then reduced by the pressure reducing means 956.

On the other hand, the complete apply state establishing means 952 is composed of: first clutch pressure boosting means 959 for boosting the oil pressure to be fed to the hydraulic servo C-1, by adding the shelf pressure set to the base pressure, till the first clutch C1 comes into a partially applied state after the shift of the vehicle from the stop state to the start state is detected; and second clutch pressure boosting means 960 for further boosting the oil pressure to be fed to the hydraulic servo C-1, till the first clutch C1 comes into a completely applied state after the partially applied state.

Fig. 2 is a schematic diagram of an automatic transmission according to the embodiment of the present invention, and Fig. 3 is a diagram tabulating the operations of an automatic transmission according to the embodiment of the present invention.

As shown, the rotation, as generated by the engine 10, is transmitted through an output shaft 11 to the torque converter 12 acting as the fluid transmission unit. The torque converter 12 transmits the rotation of the engine 10 to an output shaft 14 through a fluid (or working oil).

However, if the vehicle speed exceeds a set value, a lockup clutch L/C is applied so that the rotation can be transmitted directly to the output shaft 14.

This output shaft 14 is connected to the speed change unit 16. This speed change unit 16 is constructed of a main transmission 18 for effecting three forward and one reverse gear stages, and an underdrive auxiliary transmission 19. Moreover, the rotation of the main transmission 18 is transmitted through a counter drive gear 21 and a counter driven gear 22 to the auxiliary transmission 19, the output shaft 23 of which has its rotation transmitted through an output gear 24 and a ring gear 25 to a differential unit 26.

In this differential unit 26, the rotation, as transmitted through the output gear 24 and the ring gear 25, is differentiated so that the differential rotations are transmitted through left and right drive shafts 27 and 28 to the not-shown drive wheels.

The main transmission 18 is equipped with not only a first planetary gear unit 31 and a second planetary gear unit but also a first clutch C1, a second clutch C2, a first brake B1, a second brake B2, a third brake B3, a one-way clutch F1 and a one-way clutch F2 for transmitting the torque selectively between the individual components of the two planetary gear units 31 and 32.

The first planetary gear unit 31 is composed of: a ring gear $R_1$ connected to a drive unit case 34 through the third brake B3 and the one-way clutch F2, as arranged in parallel with each other; a sun gear $S_1$ formed on a sun gear 36 fitted on and rotatably supported by the outer shaft 14; a carrier $CR_1$ connected to the counter drive gear 21; and pinions $P_{1A}$ and $P_{1B}$ interposed to mesh with each other between the ring gear $R_1$ and the sun gear $S_1$ and rotatably supported by the carrier $CR_1$.

Moreover, the sun gear 36 is connected through the second clutch C2 to the output shaft 14. This sun gear 36 is further connected through the first brake B1 to the drive unit case 34 and through the one-way clutch F1 and the second brake B2, as arranged in series with each other, to the drive unit case 34.

On the other hand, the second planetary gear unit 32 is composed of: a ring gear $R_2$ connected through the first clutch C1 to the output shaft 14; a sun gear $S_2$ formed on the sun gear 36 integrally with the sun gear $S_1$; a carrier $CR_2$ connected to the carrier $CR_1$; and a pinion $P_2$ interposed to mesh with the ring gear $R_2$ and the sun gear $S_2$, rotatably supported by the car-

rier $CR_2$ and formed integrally with the pinion $F_{1B}$.

Moreover, the counter drive gear 21 is in meshing engagement with the counter driven gear 22, as arranged in the auxiliary transmission 19, to transmit the rotation, whose speed is changed by the main transmission 18, to the auxiliary transmission 19.

This auxiliary transmission 19 is equipped with not only a third planetary gear unit 38 but also a third clutch C3, a fourth brake B4 and a one-way clutch F3 for transmitting the torque selectively between the individual components of the third planetary gear unit 38.

The third planetary gear unit 38 is composed of: a ring gear $R_3$ connected to the counter driven gear 22; a sun gear $S_3$ formed on a sun gear shaft 39 fitted rotatably on the output shaft 23; a carrier $CR_3$ fixed on the output shaft 23; and a pinion $P_3$ interposed to mesh with the ring gear $R_3$ and the sun gear $S_3$ and rotatably supported by the carrier $CR_3$.

Here will be described the operations of the automatic transmission thus constructed.

Incidentally, in Fig. 3: S1 - the first solenoid valve; S2 - the second solenoid valve; S3 - the third solenoid valve; C1 - the first clutch; C2 - the second clutch; C3 - the third clutch; B1 - the first brake; B2-the second brake; B3 - the third brake; B4 - the fourth brake; and F1 to F3 - the one-way clutches. Moreover: R-an R-range; N - an N-range; D - a D- range; 1ST - a gear stage at the 1st speed; 2ND - a gear stage at the 2nd speed; 3RD - a gear stage at the 3rd speed; and 4TH - a gear stage at the 4th speed.

Moreover, symbols O indicate: that a first solenoid signal $S_1$, a second solenoid signal $S_2$ and a third solenoid signal $S_3$ for opening/closing the first solenoid valve S1, the second solenoid valve S2 and the third solenoid valve S3, respectively, are ON; that the first clutch C1, the second clutch C2, the third clutch C3, the first brake B1, the second brake B2, the third brake B3 and the fourth brake B4 are applied; and that the one-way clutches F1 to F3 are locked.

On the other hand, symbols X indicate: that the first solenoid signal $S_1$, the second solenoid signal $S_2$ and the third solenoid signal $S_3$ for opening/closing the first solenoid valve S1, the second solenoid valve S2 and the third solenoid valve S3, respectively, are OFF; that the first clutch C1, the second clutch C2, the third clutch C 3, the first brake B1, the second brake B2, the third brake B3 and the fourth brake B4 are released; and that the one-way clutches F1 to F3 are free.

Incidentally, symbols $\Delta$ indicate the ON/OFF when the neutral control state is established, and a parenthesized circle (O) indicates that the third brake B3 is applied at an engine braking time.

At the 1st speed in the D-range, the first clutch C1 and the fourth brake B4 are applied to lock the one-way clutches F2 and F3. Then, the rotation of the output shaft 14 is transmitted through the first clutch C1 to the ring gear $R_2$. In this state, the rotation of the ring gear $R_1$ is blocked by the one-way clutch F2 so that the rotation of the carrier $CR_2$ is drastically decelerated, while rotating the sun gear $S_2$ idly, and is transmitted to the counter drive gear 21.

The rotation, as transmitted from the counter drive gear 21 to the counter driven gear 22, is transmitted to the ring gear $R_3$. However, the rotation of the sun gear $S_3$ is blocked by the fourth brake B4 so that the rotation of the carrier $CR_3$ is further decelerated and transmitted to the output shaft 23.

At the 2nd speed in the D-range, on the other hand, the first clutch C1, the first brake B1, the second brake B2 and the fourth brake B4 are applied to lock the one-way clutches F1 and F3. Then, the rotation of the output shaft 14 is transmitted through the first clutch C1 to the ring gear $R_2$, and the rotation of the sun gear $S_2$ is blocked by the second brake B2 and the one-way clutch F1. As a result, the rotation of the ring gear $R_2$ is decelerated and transmitted to the carrier $CR_2$, the rotation of which is transmitted to the counter drive gear 21 while rotating the ring gear $R_1$ idly.

The rotation, as transmitted from the counter drive gear 21 to the counter driven gear 22, is transmitted to the ring gear $R_3$. However, the rotation of the sun gear $S_3$ is blocked by the fourth brake B4 so that the rotation of the carrier $CR_3$ is decelerated and transmitted to the output shaft 23.

Next, at the 3rd speed in the D-range, the first clutch C1, the third clutch C3, the first brake B1 and the second brake B2 are applied to lock the one-way clutch F1. Then, the rotation of the output shaft 14 is transmitted through the first clutch C1 to the ring gear $R_2$, and the rotation of the sun gear $S_2$ is blocked by the second brake B2 and the one-way clutch F1. As a result, the rotation of the ring gear $R_2$ is decelerated and transmitted to the carrier $CR_2$ so that the rotation of the carrier $CR_2$ is transmitted to the counter drive gear 21 while rotating the ring gear $R_1$ idly.

The rotation, as transmitted from the counter drive gear 21 to the counter driven gear 22, is transmitted to the ring gear $R_3$. However, the relative rotations of the carrier $CR_3$ and the sun gear $S_3$ are blocked by the third clutch C3 so that the third planetary gear unit 38 comes into a directly connected state. As a result, the rotation of the counter driven gear 22 is transmitted as it is to the output shaft 23.

Next, at the 4th speed in the D-range, the first clutch C1, the second clutch C2, the third clutch C3 and the second brake B2 are applied. Then, the rotation of the output shaft 14 is transmitted through the first clutch C1 to the ring gear $R_2$ and through the second clutch C2 to the sun gear $S_2$ so that the first planetary gear unit 31 and the second planetary gear unit 32 come into the directly connected state. As a result, the rotation of the output shaft 11 is transmitted as it is to the counter drive gear 21.

The rotation, as transmitted from the counter drive gear 21 to the counter driven gear 22, is transmitted to the ring gear $R_3$. However, the relative rotations

of the carrier $CR_3$ and the sun gear $S_3$ are blocked by the third clutch C3 so that the third planetary gear unit 38 comes into the directly connected state. As a result, the rotation of the counter driven gear 22 is transmitted as it is to the output shaft 23.

Incidentally, the automatic transmission is arranged with the not-shown hydraulic circuit for applying /releasing the first clutch C1, the second clutch C2, the third clutch C3, the first brake B1, the second brake B2, the third brake B3 and the fourth brake B4, and the hydraulic circuit can be controlled by a hydraulic control unit 40. This hydraulic control unit 40 corresponds to the control unit 95 of Fig. 1.

On the other hand, the engine 10 is arranged with an electronic control unit 43, by which the engine 10 can be controlled.

Moreover, the hydraulic control unit 40 and the electronic control unit 43 are connected with an automatic transmission control unit (ECU) 41 so that they are operated according to the control program of the automatic transmission control unit 41.

With the automatic transmission control unit 41, on the other hand, there are connected a neutral start switch (N.S.S.W.) 45, an oil temperature sensor 46, an R.P.M. sensor 47, a brake switch 48, an engine R.P. M. sensor 49, a throttle opening sensor 50 and a vehicle speed sensor 5 1. Incidentally, these engine R.P.M. sensor 49 and R.P.M. sensor 47 correspond to the input R. P.M. sensor 91 and the . output R.P.M. sensor 92 of Fig. 1, respectively.

Thus: the shift position of the not-shown shift lever, i.e., the selected range can be detected by the neutral start switch 45; the temperature of the oil in the hydraulic circuit can be detected by the oil temperature sensor 46; and the R.P.M. of the input side of the first clutch C1, i.e., the R.P.M. of the output shaft 14 (as will be called the "clutch input side R.P.M.") $N_{C1}$ can be detected by the R.P.M. sensor 47.

Moreover: whether or not the not-shown brake pedal is depressed can be detected by the brake switch 48 the engine R.P.M. $N_E$ can be detected by the engine R.P.M. sensor 49; the throttle opening $\theta$ can be detected by the throttle opening sensor 50; and the vehicle speed can be detected by the vehicle speed sensor 51.

Here will be described the hydraulic circuit.

Fig. 4 is a first diagram showing a hydraulic circuit of the automatic transmission according to the embodiment of the present invention, and Fig. 5 is a second diagram showing a hydraulic circuit of the automatic transmission according to the embodiment of the present invention.

In these Figures, a primary valve 59 adjusts the oil pressure coming from the not-shown oil pressure source and outputs the adjusted oil pressure as the line pressure to a line L-21. Moreover, a manual valve 55 is provided with ports 1, 2, 3, D, $P_L$ and R so that the line pressure fed from the primary valve 59 via lines L-21 and L-4 to the port $P_L$ is generated as the 1-range pressure, the 2-range pressure, the 3- range pressure, the D-range pressure and the R-range pressure, respectively, at the ports 1, 2, 3, D and R by operating the not-shown shift lever.

When the shift lever is placed in the forward drive position, the D-range oil pressure, as generated at the port D, is fed via a line L-1 to the second solenoid valve S2, via a line L-2 to a 1-2 shift valve 57 and via a line L-3 to a B-1 sequence valve 56. On the other hand, the line pressure from the primary valve 59 is fed via the line L-21 to the third solenoid valve S3.

Moreover, the line pressure from the line L-21 is fed via the line L-4 to a solenoid modulator valve 58 and further via a line L-5 to the first solenoid valve S1 and a 2-3 shift valve 60.

The first solenoid signal $S_1$, the second solenoid signal $S_2$ and the third solenoid signal $S_3$ for opening /closing the first solenoid valve S1, the second solenoid valve S2 and the third solenoid valve S3 are turned ON/OFF in response to the signals coming from the hydraulic control unit 40 (Fig. 2), so that the first solenoid valve S1 feeds the signal oil pressure via a line L-8 to the 1-2 shift valve 57 and a 3-4 shift valve 62, the second solenoid valve S2 feeds the signal oil pressure via a line L-9 to the 2-3 shift valve 60, and the third solenoid valve S3 feeds the signal oil pressure via a line L-10 to a neutral relay valve 64.

The 1-2 shift valve 57 takes an upper half position (i.e., an upper position of the spool) at the 1st speed and a lower half position (i.e., a lower position of the spool) at the 2nd to 4th speeds; the 2-3 shift valve 60 takes the lower half position at the 1st and 2nd speeds and the upper half position at the 3rd and 4th speeds; the 3-4 shift valve 62 takes the upper half position at the 1st and 4th speeds and the lower half position at the 2nd and 3rd speeds; and the neutral relay valve 64 takes the upper half position in the neutral control state and the lower half position at the 1st to 4th speeds.

The solenoid module valve 58 is connected via a line L-12 to a linear solenoid valve 66, which is connected via a line L-13 to a C-1 control valve 67. The linear solenoid valve 66 is further connected via a line L-22 to the primary valve 59.

In response to the signal from the hydraulic control unit 40, moreover, the linear solenoid valve 66 is controlled to feed a throttle pressure $P_{TH}$ as the control oil pressure to the control valve 67 via the line L-13. On the other hand, the C-1 control valve 67 is fed with the D-range pressure via the lines L-3 and L-14 so that it adjusts the fed D-range pressure to an oil pressure (as will be called the "C-1 oil pressure") $P_{C1}$ of the hydraulic servo C-1, as accords to the throttle pressure $P_{TH}$ coming from the linear solenoid valve 66 and feeds the adjusted oil pressure $P_{C1}$ to a line L-15.

The B-1 sequence valve 56 is arranged with a spring, as located at the left end, and is formed with a control oil chamber, as located at the right end, and the spring applies its load to the spool. Moreover, the B-1 sequence valve 56 is fed at its control oil chamber with the D-range pressure via the line L-3 to take the lower half position at the 1st speed. When the oil pressure is fed at the 2nd speed to the hydraulic servo B-2 so that it rises, the B-1 sequence valve 56 is fed with the sequence pressure from the hydraulic servo B-2 so that it has its spool pushed to the right by the sequence pressure and the spring load to take the upper half position.

As a result, the oil pressure from the 1-2 shift valve 57 is fed through the B-1 sequence valve 56 to the 3-4 shift valve 62 and further through the 1-2 shift valve 57 and the neutral relay valve 64 to a hydraulic servo B1. Thus, the hydraulic servo B-1 is fed with the oil pressure according to the rise of the oil pressure in the hydraulic servo B-2.

Incidentally, the neutral relay valve 64 takes the upper half position when in the neutral control state. In this neutral control state, therefore, the C-1 oil pressure $P_{C1}$, as generated in the line L-15, is fed through a line L-16, the neutral relay valve 64 and a line L-17 to the hydraulic servo C-1. Moreover, the oil under the C-1 oil pressure $P_{C1}$ is fed via lines L-23 and L-24 to a B-1 control valve 70.

Moreover, the neutral relay valve 64 takes the lower half position at the 1st to 4th speeds. At the 1st to 4th speeds, therefore, the oil under the D- range pressure is fed through the line L-3, the neutral relay valve 64 and the line L-17 to the hydraulic servo C-1. In the neutral control state, on the other hand, the neutral relay valve 64 is switched to the upper half position to connect the line L-16 and the line L-17.

Incidentally, numeral 68 designates a damper valve which is arranged in the line L-17 for smoothing the discharge of the oil from the hydraulic servo C-1; characters B-1 a hydraulic servo of the first brake B1; characters B-2 a hydraulic servo of the second brake B2; and characters B-4 a hydraulic servo of the fourth brake B4.

Here will be described the operations of the automatic transmission control unit at the time of a change from the N-range to the D-range (as will be called "N-D change").

Fig. 6 is a main flow chart showing the operations of the automatic transmission control unit according to the embodiment of the present invention.

In this case, simultaneously as the ignition of the engine 10 (Fig. 2) is turned ON, the main flow is started to repeat the N-D change control and the neutral control till the ignition is turned OFF.

Step S1: The N-D change control is executed.

Step S2: The neutral control is executed.

Here will be described the N-D change control subroutine of Step S1 of Fig. 6.

Fig. 7 is a first flow chart of an N-D change control routine in the embodiment of the present invention; Fig. 8 is a second flow chart of the N-D change control routine in the embodiment of the present invention; Fig. 9 is a diagram illustrating a map of a relation between an input torque and a throttle pressure in the embodiment of the present invention; Fig. 10 is a diagram illustrating a map of a relation between an engine R.P.M. and a throttle pressure in the embodiment of the present invention; Fig. 11 is a diagram illustrating a map of a relation between a . throttle opening and a throttle pressure in the embodiment of the present invention; and Fig. 12 is a time chart illustrating the N-D change control routine in the embodiment of the present invention. Incidentally: Fig. 9 plots the throttle pressure $P_{TH}$ against the input torque; Fig. 10 plots the throttle pressure $P_{TH}$ against the engine R.P.M. $N_E$; and Fig. 11 plots the throttle pressure $P_{TH}$ against the throttle opening $\theta$.

Step S1-1: The start state detection means 94 (Fig. 1) decides, on the basis of the signal from the neutral start switch 45 (Fig. 2), whether or not the N-D change has been made by the starting operation of the driver. This N-D change control subroutine advances to Step S1-2, if the N-D change has been made, but is ended if NOT.

Step S1-2: The clutch input side R.P.M. $N_{C1S}$ at the N-D change time is detected by the input R.P.M. sensor 91.

Step S1-3: The third solenoid signal $S_3$ for opening/ closing the third solenoid valve S3 is turned ON.

Step S1-4: The throttle pressure $P_{TH}$ according to the input torque is outputted with reference to the map of Fig. 9. On the other hand, the throttle pressure $P_{TH}$ is outputted at the idling ON time with reference to the map of Fig. 10 and at the idling OFF time with reference to the map of Fig. 11.

Step S1-5: The clutch input side R.P.M. $N_{C1}$ at that time is detected, and it is decided whether or not the subtraction ($N_{C1S}$ - $N_{C1}$) of the clutch input side R.P.M. $N_{C1S}$ at the N-D change time from the detected clutch input side R.P.M. $N_{C1}$ exceeds a set value $\Delta N_{R1}$. The subroutine advances to Step S1-7, if the value ($N_{C1S}$ - $N_{C1}$) is over the set value $\Delta N_{R1}$, but to Step S1-6 if the value ($N_{cls}$ - $N_{c1}$) is below the set value $\Delta N_{R1}$.

Step S1-6: It is decided whether or not the throttle opening $\theta$ is over a set value $\theta_R$. The subroutine advances to Step S1-7, if the throttle opening $\theta$ is over the set value $\theta_R$, but returns to Step S1-4 if the throttle opening $\theta$ is below the set value $\theta_R$.

The set value $\Delta N_{R1}$ is set to the value at which the first clutch C1 starts its application (or engagement) after the not-shown piston of the hydraulic servo C-1 has reached the piston stroke end, and the set value $\theta_R$ is set to the value which implies that the driver intends to start.

Thus, in the state when the first clutch C1 starts does not engage yet, the subroutine advances to Step S1-7 when the not-shown accelerator pedal is depressed to increase the throttle opening $\theta$.

Step S1-7: The speed ratio e of the torque converter 12 is calculated from the engine R.P.M. $N_E$ and the turbine R.P. M. $N_T$ by the following Equation:

$$e = N_E/N_T.$$

Next, reference is made to the not-shown map to read out a torque ratio $t_R$ and a capacity coefficient C, as correspond to the speed ratio e, and an output torque $T_O$ is calculated by the following Equation, in which letter i designates the gear ratio of the speed change unit 16:

$$T_O = t_R \cdot C \cdot N_E^2 \cdot i.$$

Step S1-8: It is decided whether or not the output torque $T_O$ is below a preset N-D control end torque $T_{ND}$. The subroutine advances to Step S1-10, if the output torque $T_O$ is below the preset N-D control end torque $T_{ND}$, but to Step S1-9 if the output torque $T_O$ is over the preset N-D control end torque $T_{ND}$.

Step S1-9: It is decided whether or not the neural control starting conditions are satisfied. The subroutine is ended to quickly perform the neutral control of Step S2 of Fig. 6, if the starting conditions are satisfied, but advances to Step S1-10 if NOT.

In this case, the satisfaction of the starting conditions is decided, if all the following conditions are satisfied: the not-shown accelerator pedal is released so that the throttle opening θ is below a predetermined value; the oil temperature detected by the oil temperature sensor 46 is over a predetermined value; and the not-shown brake pedal is depressed to turn ON the brake switch 48.

Step S1-10: The throttle pressure $P_{TH}$ is swept up. In this case, the application of the first clutch C1 is continued by changing the control oil pressure from the linear solenoid valve 6 (Fig. 4) to boost the C-1 oil pressure $P_{C1}$ and by boosting the C-1 oil pressure $P_{C1}$ by the set pressures ΔP each time a minute time θt elapses.

Step S1-11: It is decided on the basis of the output R.P.M. $N_O$ of the speed change unit 16 whether or not the application of the first clutch C1 has been ended. In this case, the R.P.M. of the output side of the first clutch C1 is estimated by $N_O \cdot i$ if the speed change unit 16 has the gear ratio i. Hence, it is decided whether or not the clutch input side R.P.M. $N_{C1}$ is smaller the addition of the output side R.P.M. $N_O \cdot i$ and a set value $\Delta N_{R2}$, as expressed by the fol lowing relation:

$$N_{C1} \leq N_O \cdot i + \Delta N_{R2}.$$

The subroutine advances to Step S1-13, if the application of the first clutch C1 has been ended, but to Step S1-12 if NOT.

Step S1-12: It is decided whether or not the throttle pressure $P_{TH}$ has reached a set value $P_{THR}$. The subroutine advances to Step S1-13, if the throttle pressure $P_{TH}$ has reached the set value $P_{THR}$, but returns to Step S1-7, if NOT.

Step S1-13: The third solenoid signal $S_3$ is turned OFF.

Step S1-14: The throttle pressure $P_{TH}$ is returned to an ordinary value corresponding to the gear stage, the throttle opening θ and so on.

In case the N-D change is thus made, the application of the first clutch C1 is started when the third solenoid signal $S_3$ for opening/closing the third solenoid valve S3 (Fig. 5) is turned ON so that the C-1 oil pressure $P_{C1}$ corresponding to the input torque is fed to the hydraulic servo C-1. Then, as the clutch input side R.P.M. $N_{C1}$ is reduced and as the throttle opening θ is increased by the depression of the not-shown accelerator pedal by the driver, the C-1 oil pressure $P_{C1}$ is gradually boosted.

At the end of the application of the first clutch C1, the third solenoid signal $S_3$ is then turned OFF to start the vehicle.

In this meanwhile, the output torque $T_O$ is calculated, and it is decided that the starting conditions of the neutral control are satisfied, in case the calculated output torque $T_O$ is over the N-D control ending torque $T_{ND}$. If the starting conditions are satisfied, the subroutine quickly shifts to the neutral control. In case the N-D chance is made, therefore, the operability can be improved, because the neutral control is not made before the output torque $T_O$ exceeds the N-D control ending torque $T_{ND}$ so that the driver feels the N-D change.

After the N-D change, the subroutine quickly transfers to the neutral control if the conditions for starting the neutral control are satisfied, so that the effects for reducing the fuel consumption and suppressing the vibration can be enhanced.

Here will be described the neutral control subroutine of Step S2 of Fig. 6.

Fig. 13 is a flow chart of a neutral control subroutine in the embodiment of the present invention, and Fig. 25 is a time chart of an automatic transmission control unit in the embodiment of the present invention. Incidentally, Fig. 25 is used together for the later description of the individual subroutines.

Step S2-1: The release state establishing means 951 (Fig. 1) executes the first clutch release control. In this case, with the vehicle speed zero being assumed, the shift output of the 2nd speed is issued at a set timing to start the applications of the second brake B2 (Fig. 2) and the third brake B3 thereby to effect the hill hold control, and the throttle pressure $P_{TH}$ is swept down at a set timing.

For these operations, the engine R.P.M. $N_E$ corresponding to the input torque is determined, and the throttle pressure $P_{TH}$ corresponding to the engine R.P.M. $N_E$ is determined and set to a set oil pressure $P_1$ so that the C-1 oil pressure $P_{C1}$ is set: to the-set oil pressure $P_1$ and is then gradually reduced.

Incidentally, the input torque can be detected not only from the engine R.P.M. $N_E$ but also indirectly from the engine air intake, the fuel injection rate and so on. Moreover, the input torque of the speed change unit 16 can also be directly detected by the not-shown torque sensor. In this case, moreover, this torque sensor is attached to the output shaft 14 of the torque converter 12. Step S2-2: The release state establishing means 951 executes the in-neutral control to establish the neutral control state. In this case, the stabilizations of the engine R.P.M. $N_E$ and the clutch input side $N_{C1}$ are awaited.

The C-1 oil pressure $P_{C1}$ is boosted or reduced by set pressures on the basis of those engine R.P.M. $N_E$ and clutch input side R.P.M. $N_{C1}$ stabilized.

Step S2-3: The complete apply state establishing means 952 executes the first clutch apply control. In this case, the C-1 oil pressure $P_{C1}$ is boosted by the set values which are set on the basis of the throttle opening θ, the engine R.P.M. $N_E$ and so on, to end the movement of the piston of the hydraulic servo C-1 (Fig. 5) in the piston stroke. After the end of the piston movement in the piston stroke of the hydraulic servo C-1, the C-1 oil pressure $P_{C1}$ is boosted by the set pressures to prevent the application shock.

Here will be described the subroutine of the first clutch release control at the Step S2-1 of Fig. 13 with reference to Figs. 14 to 16.

Fig. 14 is a first flow chart of a first clutch release control subroutine in the embodiment of the present invention; Fig. 15 is a second flow chart of a first clutch release control subroutine in the embodiment of the present invention; and Fig. 16 is a diagram illustrating relations between an engine R.P.M., and an input torque and a throttle pressure in the embodiment of the present invention. Incidentally, Fig. 16 plots the input torque $T_T$ (= $t \cdot C \cdot N_E^2$) [Kg·m] and the throttle pressure $P_{TH}$ [Kg·cm$^2$] against the engine R.P.M. $N_E$ [rpm]. Step S2-1-1: It is decided whether or not the third solenoid valve $S_3$ is ON. The subroutine advances to Step S2-1-6, if ON, but to Step S2-1-2 if OFF. In case the conditions for starting the neutral control are satisfied in the decision of Step S1-9 of Fig. 8, the third solenoid signal $S_3$ is already ON so that the subroutine transfers directly to the neutral control to start the hill- hold control. Step S2-1-2: The stop state detection means 93 (Fig. 1) estimates the vehicle speed zero on the basis of the change in the clutch input side R.P.M. $N_{C1}$.

Step S2-1-3: The satisfaction of the neutral control starting conditions, i.e., the conditions for starting the hill hold control and the neutral control is awaited. If the starting conditions are satisfied, the timing operation of the not-shown first timer is started, and the subroutine advances to Step S2-1-4.

In this case, the satisfaction of the starting conditions is decided if all the following conditions are satisfied: the clutch input side R.P.M. $N_{C1}$ is substantially 0; the not-shown accelerator pedal is released so that the throttle opening θ is below a predetermined value; the oil temperature detected by the oil temperature sensor 46 (Fig. 2) is over a predetermined value; and the not-shown brake pedal is depressed to turn ON the brake switch 48. Incidentally, whether or not the clutch input side R.P.M. $N_{C1}$ is substantially 0 is decided depending upon whether or not the detection limit of the R.P.M. sensor 47 is detected. In the present embodiment, it is decided that the detection limit is detected, if the actual vehicle speed reaches a set value (2 [km/h]).

Step S2-1-4: The lapse of the time period $T_1$ measured by the first timer is awaited, and the subroutine advances to Step S2-1- 5 if the time period $T_1$ elapses. Here, this time period $T_1$ is calculated by the vehicle speed zero estimation, and it is estimated that the vehicle speed is 0 when the time period $T_1$ elapses.

Step S2-1-5: The third solenoid signal $S_3$ is turned ON to bring the neutral relay valve 64 (Fig. 5) to the upper half position, in which the C-1 oil pressure $P_{C1}$ can be controlled.

Step S2-1-6: The 2nd speed shift output for starting the hill hold control is issued to turn ON the first solenoid signal $S_1$ for opening/closing the first solenoid valve S1 so that the oil pressure is fed to the hydraulic servo B-2 of the second brake B2 to apply the second brake B2. In accordance with the rise of the oil pressure in the hydraulic servo B-2, moreover, the sequence pressure in the hydraulic servo B-2 is fed to the B-1 sequence valve 56 so that the oil pressure is fed to the hydraulic servo B-1 to apply the first brake B1.

Thus, the hill hold control is executed to establish the 2nd speed gear stage in the speed change unit 16 so that the first clutch C1, the first brake B1, the second brake B2 and the fourth brake B4 are applied to lock the one-way clutches F1 and F3. In this state, if the vehicle is about to run backward downhill, the backward rotation is transmitted to the output shaft 23 of the auxiliary transmission 19 to rotate the ring gear $R_1$ forward. However, this rotation is blocked by the one-way clutch F2 so that the vehicle will not run backward.

Step S2-1-7: As shown in Fig. 16, the engine R.P.M. $N_E$ corresponding to the input torque $T_T$ is detected to set the value of the engine R.P.M. $N_E$ to a reference engine R.P.M. $N_{Em}$.

Step S2-1-8: The throttle pressure $P_{TH}$ just before the start of releasing the first clutch C1 is determined in a manner to correspond to the engine R.P.M. $N_E$ and is used as the set oil pressure $P_1$ to reduce the C-1 oil pressure $P_{C1}$ to the set oil pressure $P_1$.

Step S2-1-9: It is decided whether or not the speed ratio e, as expressed by the following Equation, is larger than a constant $e_2$ (= 0.25). The subroutine advances to Step S2-1-10, if the speed ratio e is larger than the constant $e_2$, but to Step S2-1-12 if NOT.

The constant $e_2$ takes a value at the instant when the release of the first clutch C1 is slightly started. Incidentally, the speed ratio e may be replaced by the clutch input side R.P.M. $N_{C1}$.

Step S2-1-10: It is decided whether or not the PNC1 signal is ON. The subroutine advances to Step S2-1- 12, if the PNC1 signal is ON, but to Step S2-1-11 if OFF. Step S2-1-11: The engine control unit 43 turns ON the PNC1 signal to reduce the fuel injection rate in the engine 10.

The PNC1 signal will be described in the following.

The first clutch C1 is released in the N-range but applied in the D-range, so that the load upon the engine 10 is difference between the two ranges. Therefore, the R.P.M. control is so executed by the engine control unit 43 that the idle R.P.M. may be constant in the N-range and the D-range. The fuel injection rate is made higher in the D-range and lower in the N-range.

In the- neutral control, the first clutch C1 is released to lighten the load upon the engine 10. In the neutral control, therefore, it is also necessary to reduce the fuel injection rate. Because of a poor response of the R.P.M. control by the engine control unit 43, however, the fuel injection rate is liable to remain as it is, despite the release of the first clutch C1 is started. This may deteriorate the effect for improving the fuel consumption and may cause the engine racing.

As described before, therefore, the PNC1 signal is promptly turned ON in case the release of the first clutch C1 is started.

Step S2-1-12: The engine R.P.M. $N_E$ corresponding to the input torque $T_T$ is detected again.

Step S2-1-13: It is decided whether or not the engine R.P.M. $N_E$ has changed, as compared with the reference engine R.P.M. $N_{Em}$. The subroutine advances to Step S2-1-14, if the answer is YES, but to Step S2-1-15 if NOT.

Step S2-1-14: The reference engine R.P.M. $N_{Em}$ is set with the value of the engine R.P.M. $N_E$ at the instant when it is decided at Step S2-1-13 that the engine R.P.M. $N_E$ has changed with respect to the reference engine R.P.M. $N_{Em}$, and the C-1 oil pressure $P_{C1}$ is changed to the throttle pressure $P_{TH}$ corresponding to the new reference engine R. P.M. $N_{Em}$.

Step S2-1-15: The throttle pressure $P_{TH}$, i.e., the C-1 oil pressure $P_{C1}$ is reduced (or swept down) by set pressures $P_{THDOWN}$ at each lapse of a set time period $T_{DOWN}$, as expressed by the following Equation:

$$P_{TH} = P_{TH} - P_{THDOWN}.$$

Step S2-1-16: After the release state of the first clutch C1 has been established, the pressure reduction of Step S2-1-15 is continued till the speed ratio e exceeds a constant $e_1$. This pressure reduction of Step S2-1-15 is stopped when the gear ratio e exceeds the constant $e_1$. This constant $e_1$ is set to 0.75, for example, while considering the delay of the change of the clutch input side R.P.M. $N_{C1}$ for the manipulation of the oil pressure when the first clutch C1 is released. Incidentally, the speed ratio e may be replaced by the clutch input side R. P.M. $N_{C1}$.

If the applied state of the first clutch C1 is detected by deciding whether or not a differential rotation $\Delta$ N has changed, this differential rotation $\Delta$ N will not change no matter whether the first clutch C1 might be completely applied or released. As a result, it is difficult to differentiate the state, in which the first clutch C1 is completely applied, and the state in which the first clutch C1 is released.

Therefore, the state just before the application of the first clutch C1 is started can be restored without fail by awaiting that the speed ratio e overcomes the constant $e_1$.

Here will be described the subroutine of the vehicle speed zero estimation of Step S2-1-2 of Fig. 14.

Fig. 17 is a flow chart of a vehicle speed zero estimate subroutine in the embodiment of the present invention.

Step S2-1-2-1: The R.P.M. Difference $\Delta N_{C1(i)}$ is calculated by subtracting a clutch input side R.P.M. $N_{C1(i-1)}$ of a time period $\Delta$ t before from a clutch input side R.P.M. $N_{C1(i)}$ of the present time. In this case, the time period $\Delta$ t is set by the clock in the automatic transmission control unit 41 (Fig. 2) so that the clutch input side R.P.M. $N_{C1}$ is detected every time periods $\Delta$ t.

Step S2-1-2-2: A deceleration A of the vehicle is calculated by dividing the R.P.M. Difference $\Delta N_{C1(i)}$ by the time period $\Delta$ t.

Step S2-1-2-3: The time period $T_1$ till the stop of the vehicle is calculated by dividing the present clutch input side R.P.M. $N_{C1(i)}$ by the deceleration A.

Here will be described the subroutine of the in-neutral control of Step S2-2 of Fig. 13 with reference to Figs. 18 to 21.

Fig. 18 is a first flow chart of an in-neutral control subroutine in the embodiment of the present invention; Fig. 19 is a second flow chart of an in-neutral control subroutine in the embodiment of the present invention; Fig. 20 is a diagram illustrating the state of a first clutch in a neutral control state in the embodiment of the present invention; and Fig. 21 is a time chart illustrating an engine R.P.M., a clutch input side R.P.M. and a C-1 oil pressure at a neutral control time in the embodiment of the present invention. Incidentally, Fig. 20 plots the differential rotation $\Delta$ N and the (dragging) torque against the piston stroke.

Step S2-2-1: An oil pressure control flag F, the counted value C of the not-shown counter, and the reference R.P.M. difference $\Delta N_m$ are set to the following initial values:

$$F \leftarrow Off;$$

$$C \leftarrow 0;$$

and

$$\Delta N_m \leftarrow \text{the value } (N_E - N_{C1}) \text{ at that time.}$$

Steps S2-2-2 and S2-2-3: The C-1 oil pressure $P_{C1}$ is held at the final value of the first clutch release control. After it has been confirmed that the first clutch C1 was released to a predetermined state, a decision is promptly started as to whether the differential rotation $\Delta$ N has been changed. Then, this decision may be mistaken by the change in the differential rotation $\Delta$ N due to the pressure reduction in the first clutch release control. Therefore, the not-shown second timer is used to continue the holding of the C-1 oil pressure $P_{C1}$ till the time period $T_2$ elapses. As a result, the decision upon whether or not the differential rotation $\Delta$ N has been changed can be postponed to prevent the C-1 oil pressure $P_{C1}$ from being controlled in the unstable state just after the first clutch C1 has been released. When the time period $T_2$ elapses, the subroutine advances to Step S2- 2-4.
Step S2-2-4: the differential rotation calculation means 953 (Fig. 1) calculates the differential rotation $\Delta$ N between the engine R.P.M. $N_E$ and the clutch input side R.P.M. $N_{C1}$.
Step S2-2-5: It is decided whether or not a preset sampling time is reached, that is, whether or not a time period 1.0 [sec] or 0.5 [sec] has elapsed. The subroutine advances to Step S2-2-6, if the sampling time is reached, but to Step S2-2-14 if NOT.
Step S2-2-6: The differential rotation change decision means 954 decides whether or not the absolute value of the difference between the differential rotation $\Delta$ N and the reference differential rotation $\Delta$ $N_m$ is below a set value $\Delta$ $N_R$, that is, whether or not the change in the differential rotation $\Delta$ N is below the set value $\Delta$ $N_R$.
The subroutine advances to Step S2-2-7, if below the set value $\Delta$ $N_R$, but to Step S2-2-9 if over the set value $\Delta$ $N_R$.
This set value $\Delta$ $N_R$ is set: in advance to discriminate the active state and the inactive state of the first clutch C 1, as shown in Fig. 20.

Incidentally, in case the differential rotation $\Delta$ N is to be calculated, it may be erroneously decided to have changed, if the engine R.P.M. $N_E$ and the clutch input side R.P.M. $N_{C1}$ are erroneously detected by the engine R.P.M. sensor 49 (Fig. 2) and the R.P.M. sensor 47, or if the calculations are mistaken. Noting that the differential rotation $\Delta$ N is abruptly changed if the application of the first clutch C1 is started from a premature state, therefore, the erroneous decision of the change in the differential rotation $\Delta$ N can be prevented by deciding the change of the differential rotation $\Delta$ N if the change in the differential rotation A N exceeds the set value $\Delta$ $N_R$.

Moreover, if this set value $\Delta$ $N_R$ is varied according to the oil temperature, the C-1 oil pressure $P_{C1}$ can be properly controlled from the low to high temperature states of the oil.
Step S2-2-7: It is decided whether or not the counted value C of the not-shown counter is below a set value $C_R$.
The subroutine advances to Step S2-2-8, if below the set value $C_R$, but to Step S2-2-19 if over the set value $C_R$. Step S2-2-8: The pressure boosting means 955 decides that the first clutch C1 is inactive, because of no change in the differential rotation $\Delta$ N. In this state, the piston may have excessively returned, the C-1 oil pressure $P_{C1}$ is boosted, as shown in Fig. 21, by a set pressure $\Delta$ $P_{UP}$, as follows:

$$P_{C1} \leftarrow P_{C1} + \Delta P_{UP}.$$

Moreover, the reference differential rotation $\Delta$ $N_m$ is set with the differential rotation $\Delta$ N, and the oil pressure control flag F is turned ON:

$$\Delta N_m \leftarrow \Delta N;$$

and

$$F \leftarrow ON.$$

Step S2-2-9: It is decided whether or not the change in the differential rotation $\Delta$N has a tendency to decrease, that is, whether or not the difference of the differential rotation $\Delta$ N from the reference differential rotation $\Delta$ $N_m$ is below the set value $\Delta$ $N_R$. The subroutine advances to Step S2-2-10, if below the set value $\Delta N_R$, but to Step S2-2-11 if over the set value $\Delta N_R$.
Step S2-2-10: Since the first clutch C1 can be decided to be in the course from the active state to the inactive state, the C-1 oil pressure $P_{C1}$ is held at the value of that time, and the oil pressure control flag F is turned OFF:

$$F \leftarrow OFF.$$

Specifically, even if the differential rotation $\Delta$ N is changed, this change is in the direction to decrease in case the first clutch C1 is transferring from the active state to the inactive state. At this time, if the C-1 oil pressure $P_{C1}$ is further reduced, the piston may abruptly move back to establish an excessive loss stroke. Therefore, the reduction of the C-1 oil pressure $P_{C1}$ is once inhibited and held at the value of that time in case the first clutch C1 is transferring from the active to inactive states.
Step S2-2-11: The pressure reducing means 956 reduces the C-1 oil pressure $P_{C1}$ by a set pressure $\Delta$ $P_{DOWN}$ because the first clutch C1 can be decided to be in the course from the inactive to active states, as follows:

$$P_{C1} \leftarrow P_{C1} - \Delta P_{DOWN}.$$

Moreover, the reference differential rotation $\Delta$ $N_m$ is set with the differential rotation $\Delta$ N, and the oil pressure control flag F is turned OFF whereas the value "1" is subtracted from the counted value of the counter:

$$\Delta N_m \leftarrow \Delta N;$$

$$F \leftarrow OFF;$$

and

$$C \leftarrow C - 1 \text{ (or } C = 0 \text{ for } C < 0).$$

Step S2-2-12: It is decided whether or not the oil temperature is over a set value (50 [°C]). The subroutine advances to Step S2-2-13, if the oil temperature is over the set value, but to Step S2-2-19 if NOT.

Step S2-2-13: The base pressure storage means 958 sets the C-1 oil pressure $P_{C1}$, which is before reduced at Step S2-2-11, as a reference C-1 oil pressure $P_{C1m}$ and stores it in the storage unit 957:

$$P_{C1m} \leftarrow P_{C1} \text{ before reduced.}$$

Step S2-2-14: It is decided whether or not the oil pressure control flag F is ON, that is, whether or not the C-1 oil pressure $P_{C1}$ is boosted at a previous sampling instant. The subroutine advances to Step S2-2- 15, if the oil pressure control flag F is ON, but to Step S2-2-19 if OFF.

Step S2-2-15: The differential rotation change decision means 954 decides whether or not the difference of the differential rotation $\Delta$ N from the reference differential rotation $\Delta N_m$ is below the set value $\Delta N_R$, because the C-1 oil pressure $P_{C1}$ is boosted at the previous sampling instant. The subroutine advances to Step S2-2-16, if below the set value $\Delta N_R$, but to Step S2-2-19 if over the set value $\Delta N_R$.

Step S2-2-16: The differential rotation $\Delta$ N is changed by boosting the C-1 oil pressure $P_{C1}$ at the previous sampling instant. As a result, the pressure reducing means 956 decides that the first clutch C1 is in the applied state, and reduces the C-1 oil pressure $P_{C1}$ by the set pressure $\Delta P_{DOWN}$:

$$P_{C1} \leftarrow P_{C1} - \Delta P_{DOWN}.$$

Moreover, the reference differential rotation $\Delta N_m$ is set with the differential rotation $\Delta$ N, and the oil pressure control flag F is turned OFF whereas the value "1 " is added to the counted value of the counter, as follows:

$$\Delta N_m \leftarrow \Delta N;$$

$$F \leftarrow OFF;$$

and

$$C \leftarrow C + 1.$$

As described before, it is decided whether or not the differential rotation $\Delta$ N has been changed at each sampling instant. In case the C-1 oil pressure $P_{C1}$ is boosted according to the decision, the application of the first clutch C1 may be instantly started, but the first clutch C1 may be released. Then, the idle vibration may be generated if the torque transmission is started. Therefore, in case the differential rotation $\Delta$ -N is changed to increase while the application of the first clutch C1 is being started, the C-1 oil pressure $P_{C1}$ is reduced without awaiting the subsequent sampling instant. Thus, the first clutch C1 can be prevented from being released to prevent the idle vibration.

Moreover, the C-1 oil pressure $P_{C1}$ is changed on in case the change in the differential rotation $\Delta$ N is higher than the set value $\Delta N_R$ at each sampling instant, as described before. In this case, the differential rotation changes little by little, the C-1 oil pressure $P_{C1}$ may not be changed despite the first clutch C1 has transferred to the applied state. Therefore, the reference differential rotation $\Delta N_m$ is updated only when the C-1 oil pressure $P_{C1}$ is changed. As a result, the change of the C-1 oil pressure $P_{C1}$ can be ensured, in case the differential rotation $\Delta$ N is changed little by little so that the first clutch C1 is transferring to the applied state.

Step S2-2-17: It is decided whether or not the oil temperature is over the set value (50 [°C]). The subroutine advances to Step S2-2-18, if the oil temperature is over the set value, but to Step S2-2-19 if below the set value. Step S2-2-18: The base pressure storage means 958 sets the C-1 oil pressure $P_{C1}$, which is before reduced at -Step S2-2-16, as the reference C-1 oil pressure $P_{C1m}$, and stores it in the storage unit 957, as follows:

$$P_{C1m} \leftarrow P_{C1} \text{ before reduced.}$$

Step S2-2-19: It is decided whether or not the conditions for ending the in-neutral control of the first clutch C1 are satisfied. If the ending conditions are satisfied, the in-neutral control is ended. Otherwise, the subroutine returns to Step S2-2-4, and the foregoing steps are repeated.

Incidentally, if the oil temperature is below the set value at Steps S2-2-12 and S2-2-17, the individual discs of the first clutch C1 have their viscous resistance raised higher than the ordinary value to generate the dragging resistance. As a result, it may be erroneously decided that the application of the first clutch C1 is started, despite it is not actually started. In this case, the base pressure storage means 958 will resultantly store the storage unit 957 with the reference C-1 oil pressure $P_{C1m}$ which is lower than the oil pressure before the application of the first clutch C1 is actually started.

As a result, the time period for ending the application of the first clutch C1 is elongated to cause the engine racing due to the delay in the application.

Therefore, when the oil temperature is lower than the set value, the reference C-1 oil pressure $P_{C1m}$ is not updated, but the reference C-1 oil pressure $P_{C1m}$, as stored in the storage unit 957 at the time of an ordinary oil temperature, is read out for use.

As a result, it is possible to prevent the engine from racing.

Here will be described the subroutine of the first clutch apply control at Step S2-3 of Fig. 13 with reference to Figs. 22 to 24.

Fig. 22 is a diagram illustrating a relation be tween a throttle opening and a set value in the embodiment of the present invention; Fig. 23 is a flow chart of a 1st clutch apply control subroutine in the embodiment of the present invention; and Fig. 24 is a time chart at a starting time in the embodiment of the present invention. Incidentally, Fig. 22 plots the set value against the throttle opening $\theta$.

Step S2-3-1: When the application of the first clutch C1 is started at the timing t1, the signal PNC1 is promptly turned OFF to restore the R.P.M. control of the engine 10 (Fig. 1) in the D-range state.

Step S2-3-2: The clutch input side R.P.M. $N_{C1(i)}$ at the instant when the in-neutral control ending conditions are satisfied is stored as a value $N_5$ in the not-shown memory in the automatic transmission control unit 41 (Fig. 2).

Step S2-3-3: The first clutch pressure boosting means 959 adds a constant $P_{C1S}$ as a shelf pressure to the reference C-1 oil pressure $P_{C1m}$ as the base pressure set at Steps S2-2-13 and S2-2-18, and sets the sum as the C-1 oil pressure $P_{C1}$. Incidentally, the constant $P_{C1S}$ is set to such a value as to move the not-shown piston of the hydraulic servo C-1 (Fig. 5) without fail and to reduce the engaging shock to be generated by the application.

As a result, when the driver starts the vehicle so that the transfer from the stop to the start states of the vehicle is detected, the constant $P_{C1S}$ is added to the reference C-1 oil pressure $P_{C1m}$ so that the oil pressure to be fed to the hydraulic servo C-1 is boosted to bring the first clutch C1 into a partially applied state. Subsequently, the oil pressure to be fed to the hydraulic servo C-1 is further boosted to bring the first clutch C1 into the completely applied state.

In this case, the reference C-1 oil pressure $P_{C1m}$, as set at Steps S2-2-13 and S2-2-18, is the C-1 oil pressure $P_{C1}$ before reduced, in case it is boosted by the pressure boosting means 955 and then reduced by the pressure reducing means 956. It is the start of the application of the first clutch C1 that the C-1 oil pressure $P_{C1}$ is boosted by the pressure boosting means 955 and then reduced by the pressure reducing means 956. Thus, if the C-1 oil pressure $P_{C1}$ before reduced is set to the reference C-1 oil pressure $P_{C1m}$, the C-1 oil pressure $P_{C1}$ at the time of starting the application of the first clutch C1 is the reference C- 1 oil pressure $P_{C1m}$.

Thus, the C-1 oil pressure $P_{C1}$ at the time of starting the application of the first clutch C1 is used as the reference C-1 oil pressure $P_{C1m}$, the reference C-1 oil pressure $P_{C1m}$ does not fluctuate so that the partial applied state of the first clutch C1 can always be stably achieved. As a result, it is possible to prevent the engaging shock and the engine racing.

Step S2-3-4: It is awaited that the clutch input side R.P.M. $N_{C1}$ becomes smaller than the difference of the value $N_5$ from a constant DSN. If the clutch input side R.P.M. $N_{C1}$ becomes smaller at a timing t2 than the difference of the value $N_5$ from the constant DSN, the start of application of the first clutch C1 is decided, and the subroutine advances to Step S2-3-5.

Step S2-3-5: The 1st-seed shift output is issued.

Step S2-3-6: The second clutch pressure boosting means 960 changes the throttle pressure $P_{TH}$ coming from the linear solenoid valve 66 (Fig. 4) to boost the C-1 oil pressure $P_{C1}$ to a pressure $P_B$ and then boosts the C-1 oil pressure $P_{C1}$ by set pressures $\Delta P_B$ at each lapse of a time period $\Delta t_B$ thereby to continue the application of the first clutch C1.

Step S2-3-7: It is awaited that the clutch input side R. P. M. $N_{C1}$ becomes smaller than a constant DEN. Step S2-3-8: The not-shown third timer measures the time period, and the lapse of a time period $T_3$ is a waited.

In this case, the set values of the constant $P_{C1S}$, the pressure $P_B$, the set pressure $\Delta P_B$ and so on are set on the basis of variables corresponding to the input torque $T_T$ such as the throttle opening $\theta$.

## Claims

1. A control system for an automatic transmission, comprising: a fluid transmission unit (12) for transmitting the rotation of an engine (10) to a speed change unit (16); a clutch (C1) adapted to be applied when a forward running range is selected; a hydraulic servo (C-1) for applying said clutch (C1) when fed with and oil pressure; an input R.P.M. sensor (91) for detecting the input R.P.M. of said fluid transmission unit (12); an output R.P.M. sensor (92) for detecting the output R.P.M. of said fluid transmission unit (12); stop state detecion means (93) for detecting the stop state of a vehicle; start state detection means (94) for detecting the shift of the vehicle from the stop state to the start state; and a control unit (95) for controlling the oil pressure to be fed to said hydraulic servo (C-1), wherein the oil pressure of said hydraulic servo is reduced, when the vehicle is in the stop state, to establish a neutral control state in which said clutch is released,

wherein the control unit (95) comprises: release state establishing means (951) for establishing the released state of said clutch (C1) by reducing the oil pressure to be fed to said hydraulic servo (C-1) when the stop state of the vehicle is detected; and complete apply state establishing means (952) for establishing the completely applied state of said clutch (C1) by boosting the oil pressure to be fed to said hydraulic servo (C-1) when the shift of the vehicle from the stop state to the start state is detected,

wherein said release state establishing means (951) includes: differential rotation calculation means (953) for calculating the differential rotation between said input R.P.M. and said output R.P.M.; differential rotation change decision means (954) for deciding whether or not said differential rotation has changed; pressure boosting means (955); pressure reducing means (956) and base pressure storage means (958) ;

wherein said complete apply state establishing means (952) includes: first clutch pressure boosting means (959) for boosting the oil pressure to be fed to said hydraulic servo (C-1), till said clutch comes into a partially applied state after the shift of the vehicle from the stop state to the start state is detected; and second clutch pressure boosting means (960) for further boosting the oil pressure to be fed to said hydraulic servo (C-1) till said clutch (C1) comes into a completely applied state after the partially applied state,

**characterized in that**
said pressure boosting means (955) are provided for boosting the oil pressure to be fed t:o said hydraulic servo (C-1) if it is decided that said differential rotation has not changed; said pressure reducing means (956) are provided for reducing the oil pressure to be fed to said hydraulic servo (C-1) if it is decided that said differential rotation has changed; said base pressure storage means (958) are provided for storing a storage unit (957) with the oil pressure before reduced, as a base pressure, when the oil pressure to be fed to said hydraulic servo (C-1) is boosted by said pressure boosting means (955) and then reduced by said pressure reducing means (956); and said first clutch pressure boosting means (959) adds a shelf pressure set to the base pressure.

**2.** A control system for an automatic transmission according to claim 1, further comprising an oil temperature sensor (46) for detecting the oil temperature of said automatic transmission,

wherein said base pressure storage means (958) is provided for updating said base pressure, if said oil temperature is higher than a set value, each time t:he oil pressure to be fed to said hydraulic servo (C-1) is boosted by said pressure boosting means (955) and then reduced by said pressure reducing means (956), and for holding the stored base pressure without being updated in said storage unit if said oil temperature is lower than the set value.

**3.** A control system for an automatic transmission according to claim 1 or 2,

wherein said differential rotation change decision means (954), decides whether or not said differential rotation has changed over a set value,
wherein said pressure boosting means (955) boosts the oil pressure to be fed to said hydraulic servo (C-1), if it is decided that said differential rotation has not changed over said set value, and
wherein said pressure reducing means (956) reduces the oil pressure to be fed to said hydraulic servo (C-1), if it is decided that said differential rotation has changed over said set value.

**4.** A control system for an automatic transmission according to claim 1 or 2,

wherein said differential rotation change decision means (954) decides whether or not said differential rotation has changed, at every set time periods.

**5.** A control system for an automatic transmission according to claim 1 or 2,

wherein said differential rotation change decision means (954) decides whether or not said differential rotation has changed over a set value, at every set time periods,
wherein said pressure boosting means (955) boosts the oil pressure to be fed to said hydraulic servo (C-1), if it is decided that said differential rotation has not changed over said set value, and
wherein said pressure reducing means (956) reduces the oil pressure to be fed to said hydraulic servo (C-1), if it is decided that said differential rotation has changed over

said set value.

**6.** A control system for an automatic transmission according to claim 1 or 2,

wherein said differential rotation change decision means (954) decides whether or not said differential rotation has changed, at every set time periods, and decides whether or not said differential rotation has dropped, if said set time period is not reached, and
wherein said pressure reducing means (956) reduces the oil pressure to be fed to said hydraulic servo (C-1), even if it is decided that said differential rotation has dropped.

**7.** A control system for an automatic transmission according to claim 1 or 2,

wherein said differential rotation change decision means (954) decides whether or not said differential rotation has changed over a set value, at every set time periods, and decides whether or not said differential rotation has dropped over said set value, if said set time period is not reached,
wherein said pressure boosting means (955) boosts the oil pressure to be fed to said hydraulic servo (C-1), if it is decided that said differential rotation has not changed over said set value, and
wherein said pressure reducing means (956) reduces the oil pressure to be fed to said hydraulic servo (C-1), if it is decided that said differential rotation has changed- over said set value and if it is decided that said differential rotation has dropped over said set value.

**8.** A control system for an automatic transmission according to any one of claims 1 to 7, wherein said complete apply state establishing means (952) decides the partially applied state of said clutch (C1) on the basis of the output R.P.M. of said fluid transmission unit (12)

**9.** A control system for an automatic transmission according to any one of claims 1 to 8, wherein said second clutch pressure boosting means (960) gradually boosts the oil pressure to be fed to said hydraulic servo (C-1), till said clutch (C1) comes from the partially applied state into the completely applied state.

**10.** A control system for an automatic transmission according to any one of claims 1 to 9,
wherein said stop state detection means (93) detects that the vehicle is in the stop state, if the vehicle speed is substantially zero, if the accelerator pedal is released, and if the brake pedal is depressed.

**11.** A control system for an automatic transmission according to any one of claims 1 to 10,
wherein said start state detection means (93) detects the shift of the vehicle from the stop state to the start state, if the vehicle speed substantially goes out of zero, if the accelerator pedal is depressed, or if the brake pedal is released.

**Patentansprüche**

**1.** Steuerungssystem für ein Automatikgetriebe mit: einer Fluidgetriebeeinheit (12) zur Übertragung der Drehbewegung eines Motors (10) zu einer Drehzahländerungseinheit (16); einer Kupplung (C1), die eingerückt werden kann, wenn ein Vorwärtsfahrbereich gewählt wird; einem Hydraulikservosystem (C1) zum Einrücken der Kupplung (C1), wenn dieses mit einem Öldruck versorgt wird; einem Eingangsdrehzahlsensor (91) zum Ermitteln der Eingangsdrehzahl der Fluidgetriebeeinheit (12); einem Ausgangsdrehzahlsensor (92) zum Ermitteln der Ausgangsdrehzahl der Fluidgetriebeinheit (12); einer Standzustandsermittlungseinrichtung (93) zum Ermitteln des Standzustands eines Fahrzeugs; eine Anfahrzustandsermittlungseinrichtung (94) zum Ermitteln des Wechsels des Fahrzeugs vom Standzustand in den Anfahrzustand; und einer Steuerungseinheit (95) zum Steuern des Öldrucks, der dem Hydraulikservosystem (C-1) zuzuführen ist, wobei der Öldruck des Hydraulikservosystems reduziert wird, wenn das Fahrzeug im Standzustand ist, um einen Leerlaufsteuerzustand herzustellen, in dem die Kupplung gelöst ist,

wobei die Steuerungseinheit (95) aufweist: eine Gelösterzustand-Herstellungseinrichtung (951) zum Herstellen des gelösten Zustands der Kupplung (C1) durch Reduzieren des Öldrucks, der dem Hydraulikservosystem (C-1) zuzuführen ist, wenn der Standzustand des Fahrzeugs ermittelt wird; und eine Vollständigeingerückterzustand-Herstellungseinrichtung (952) zum Herstellen des vollständig eingerückten Zustands der Kupplung (C1) durch Verstärken des Öldrucks, der dem Hydraulikservosystem (C-1) zuzuführen ist, wenn der Wechsel des Fahrzeugs vom Standzustand in den Anfahrzustand ermittelt wird,
wobei die Gelösterzustand-Herstellungseinrichtung (951) aufweist: eine Differenzdrehzahlberechnungseinrichtung (953) zum Berechnen der Differenzdrehzahl zwischen der Eingangsdrehzahl und der Ausgangsdrehzahl; eine Differenzdrehzahländerungsentscheidungseinrichtung (954) zum Entscheiden, ob sich die Differenzdrehzahl geändert hat oder nicht; eine Druckverstärkungseinrichtung (955); eine Druckreduziereinrichtung (956) und eine Basisdruckspeichereinrichtung (958); wobei die Vollständigeingerückterzustand-Herstellungseinrichtung (952) aufweist: eine erste Kupplungsdruckverstärkungseinrichtung (959) zum Verstärken des Öldrucks, der dem Hydrauliksystem (C-1) zuzuführen ist, bis die Kupplung in einen teilweise eingerückten Zustand kommt, nachdem der Wechsel des Fahrzeugs vom Standzustand in den Anfahrzustand ermittelt ist; und eine zweite Kupplungsdruckverstärkungseinrichtung (960) zum weiteren Verstärken des Öldrucks, der dem Hydraulikservosystem (C-1) zuzuführen ist, bis die Kupplung (C1) nach dem teilweise eingerückten Zustand in einen vollständig eingerückten Zustand kommt,

**dadurch gekennzeichnet**, daß

die Druckverstärkungseinrichtung (955) vorgesehen ist zum Verstärken des Öldrucks, der dem Hydraulikservosystem (C1) zuzuführen ist, wenn entschieden wird, daß die Differenzdrehzahl sich nicht geändert: hat; die Druckreduziereinrichtung (956) vorgesehen ist zum Reduzieren des Öldrucks, der dem Hydraulikservosystem (C-1) zuzuführen ist, wenn entschieden wird, daß die Differenzdrehzahl sich geändert hat; die Basisdruckspeichereinrichtung (958) vorgesehen ist zum Versorgen einer Speichereinheit (957) mit dem Öldruck vor der Reduzierung als Basisdruck, wenn der Öldruck, der dem Hydraulikservosystem (C-1) zuzuführen ist, von der Druckverstärkungseinrichtung (955) verstärkt wird und dann von der Druckreduziereinrichtung (956) reduziert wird; und die erste Kupplungsdruckverstärkungseinrichtung (959) einen Sockeldruck hinzufügt, der auf den Basisdruck eingestellt ist.

**2.** Steuerungssystem für ein Automatikgetriebe nach Anspruch 1, ferner mit einem Öltemperatursensor (46) zum Ermitteln der Öltemperatur des Automatikgetriebes,

wobei die Basisdruckspeichereinrichtung (958) vorgesehen ist zum Aktualisieren des Basisdrucks, wenn der Öldruck höher ist als ein eingestellter Wert, immer dann, wenn der Öldruck, der dem Hydraulikservosystem (C-1) zuzuführen ist, von der Druckverstärkungseinrichtung (955) verstärkt wird und dann von der Druckreduziereinrichtung (956) reduziert wird, und zum Halten des gespeicherten Basisdrucks, ohne in der Speichereinheit aktualisiert zu werden, wenn die Öltemperatur niedriger ist als der eingestellte Wert.

**3.** Steuerungssystem für ein Automatikgetriebe nach Anspruch 1 oder 2,

wobei die Differenzdrehzahländerungsentscheidungseinrichtung (954) entscheidet, ob die Differenzdrehzahl sich über einen eingestellten Wert geändert hat oder nicht,
wobei die Druckverstärkungseinrichtung (955) den Öldruck, der dem Hydraulikservosystem (C-1) zuzuführen ist, verstärkt, wenn entschieden wird, daß die Differenzdrehzahl sich nicht über den eingestellten Wert geändert hat, und
wobei die Druckreduziereinrichtung (956) den Öldruck, der dem Hydraulikservosystem (C-1) zuzuführen ist, reduziert, wenn entschieden wird, daß die Differenzdrehzahl sich über den eingestellten Wert geändert hat.

**4.** Steuerungssystem für ein Automatikgetriebe nach Anspruch 1 oder 2,

wobei die Differenzdrehzahländerungsentscheidungseinrichtung (954) zu jeder eingestellten Zeitperiode entscheidet, ob die Differenzdrehzahl sich geändert hat oder nicht.

**5.** Steuerungssystem für ein Automatikgetriebe nach Anspruch 1 oder 2,

wobei die Differenzdrehzahländerungsentscheidungseinrichtung (954) zu jeder eingestellten Zeitperiode entscheidet, ob die Differenzdrehzahl sich über einen eingestellten Wert geändert hat oder nicht,
wobei die Druckverstärkungseinrichtung (955) den Öldruck, der dem Hydraulikservosystem (C-1) zuzuführen ist, verstärkt, wenn entschieden wird, daß die Differenzdrehzahl sich nicht über den eingestellten Wert geändert hat, und
wobei die Druckreduziereinrichtung (956) den Öldruck, der dem Hydraulikservosystem (C-1) zuzuführen ist, reduziert, wenn entschieden wird, daß die Differenzdrehzahl sich über den eingestellten Wert geändert hat.

**6.** Steuerungssystem für ein Automatikgetriebe nach Anspruch 1 oder 2,

wobei die Differenzdrehzahländerungsentscheidungseinrichtung (954) zu jeder eingestellten Zeitperiode entscheidet, ob die Differenzdrehzahl sich geändert hat oder nicht, und entscheidet, ob die Differenzdrehzahl gesunken ist oder nicht, wenn die eingestellte Zeitperiode nicht erreicht wird, und
wobei die Druckreduziereinrichtung (956) den Öldruck, der dem Hydraulikservosystem (C-1) zuzuführen ist, reduziert, auch wenn entschieden wird, daß die Differenzdrehzahl gesunken ist.

**7.** Steuerungssystem für ein Automatikgetriebe nach Anspruch 1 oder 2,

wobei die Differenzdrehzahländerungsentscheidungseinrichtung (954) zu jeder eingestellten Zeitperiode entscheidet, ob die Differenzdrehzahl sich gegenüber einem eingestellten Wert geändert hat oder nicht, und entscheidet, ob die Differenzdrehzahl gegenüber dem eingestellten Wert gesunken ist oder nicht, wenn die eingestellte Zeitperiode nicht erreicht wird,
wobei die Druckverstärkungseinrichtung (955) den Öldruck, der dem Hydraulikservosystem (C-1) zuzuführen ist, steigert, wenn entschieden wird, daß die Differenzdrehzahl sich nicht gegenüber dem eingestellten Wert geändert hat, und
wobei die Druckreduziereinrichtung (956) den Öldruck, der dem Hydraulikservosystem (C-1) zuzuführen ist, reduziert, wenn entschieden wird, daß die Differenzdrehzahl sich gegenüber dem eingestellten Wert geändert hat, und wenn entschieden wird, daß die Differenzdrehzahl gegenüber dem eingestellten Wert gefallen ist.

**8.** Steuerungssystem für ein Automatikgetriebe nach einem der Ansprüche 1 bis 7,
wobei die Volleinrückzustandsherstellungseinrichtung (952) den teilweise eingerückten Zustand der Kupplung (C1) auf der Grundlage der Ausgangsdrehzahl der Fluidgetriebeeinheit (12) bestimmt.

**9.** Steuerungssystem für ein Automatikgetriebe nach einem der Ansprüche 1 bis 8,
wobei die zweite Kupplungsdruckverstärkungseinrichtung (960) den Öldruck, der dem Hydraulikservosystem (C-1) zuzuführen ist, allmählich steigert, bis die Kupplung (C1) aus dem teilweise eingerückten Zustand in den vollständig eingerückten Zustand kommt.

**10.** Steuerungssystem für ein Automatikgetriebe nach einem der Ansprüche 1 bis 9,
wobei die Standzustandsermittlungseinrichtung (93) ermittelt, daß das Fahrzeug im Standzustand ist, wenn die Fahrzeuggeschwindigkeit im wesentlichen null ist, wenn das Gaspedal nicht betätigt ist und das Bremspedal gedrückt ist.

**11.** Steuerungssystem für ein Automatikgetriebe nach einem der Ansprüche 1 bis 10,
wobei die Startzustandsermittlungseinrichtung (93) den Wechsel des Fahrzeugs vom Standzustand in den Anfahrzustand ermittelt, wenn die Fahrzeuggeschwindigkeit im wesentlichen null überschreitet, wenn das Gaspedal gedrückt ist oder wenn das Bremspedal nicht betätigt ist.

**Revendications**

**1.** Système de commande pour une transmission automatique, comprenant : une unité de transmission de fluide (12) pour transmettre la rotation d'un moteur (10) à une unité de changement de vitesse (16) ; un embrayage (C1) conçu pour être embrayé lorsqu'une plage de vitesse avant est sélectionnée ; un servo-distributeur hydraulique (C-1) pour embrayer ledit embrayage (C1) lorsqu'il est alimenté avec une pression d'huile ; un détecteur (91) du nombre de rotations par minute à l'entrée pour détecter le nombre de rotations par minute à l'entrée de ladite unité de transmission de fluide (12) ; un détecteur (92) du nombre de rotations par minute à la sortie pour détecter le nombre de rotations par minute à la sortie de ladite unité de transmission de fluide (12) ; un moyen de détection de l'état d'arrêt (93) pour détecter l'état d'arrêt d'un véhicule ; un moyen de détection de l'état de démarrage (94) pour détecter le passage du véhicule de l'état d'arrêt à l'état de démarrage ; et une unité de commande (95) pour commander la pression d'huile destinée à alimenter ledit servo-distributeur hydraulique (C-1), dans lequel la pression d'huile dudit servo-distributeur hydraulique est réduite lorsque le véhicule est à l'état d'arrêt pour établir un état de point mort dans lequel ledit embrayage est débrayé,

dans lequel l'unité de commande (95) comprend : un moyen d'établissement de l'état de débrayage (951) pour établir l'état débrayé dudit embrayage (C1) en réduisant la pression d'huile destinée à alimenter ledit servo-distributeur hydraulique (C-1) lorsque l'état d'arrêt du véhicule est détecté ; et un moyen d'établissement de l'état complètement embrayé (952) pour établir l'état complètement embrayé dudit embrayage (C1) en soumettant à une suralimentation de pression l'huile destinée à alimenter ledit servo-distributeur hydraulique (C-1) lorsque le passage du véhicule de l'état d'arrêt à l'état de démarrage est détecté,

dans lequel ledit moyen d'établissement de l'état débrayé (951) englobe : un moyen de calcul (953) de la rotation différentielle pour calculer la rotation différentielle entre ledit nombre de rotations par minute à l'entrée et: ledit nombre de rotations par minute à la sortie ; un moyen de décision de changement de la rotation différentielle (954) pour prendre une décision concernant le fait de savoir si ladite rotation différentielle a changé ou non ; un moyen (955) pour appliquer une suralimentation de pression ; un moyen (956) pour réduire la pression et un moyen (958) pour conserver la pression de base ;

dans lequel ledit moyen d'établissement de l'état complètement embrayé (952) englobe : un premier moyen (959) pour soumettre l'embrayage à une suralimentation de pression dans le but de soumettre à une suralimentation de pression l'huile destinée à alimenter ledit servo-distributeur hydraulique (C-1) jusqu'à ce que ledit embrayage parvienne à un état partiellement embrayé après avoir détecté le passage du véhicule de l'état d'arrêt à l'état de démarrage ; et un deuxième moyen (960) pour soumettre l'embrayage à une suralimentation de pression dans le but de soumettre à une suralimentation de pression supérieure l'huile destinée à alimenter ledit servo-distributeur hydraulique (C-1) jusqu'à ce que ledit embrayage (C1) parvienne à un état complètement embrayé après l'état partiellement embrayé,

**caractérisé en ce que**
ledit moyen de suralimentation de pression (955) est prévu pour soumettre à une suralimentation de pression l'huile destinée à alimenter ledit servo-distributeur hydraulique (C-1) lorsque la décision est telle que ladite rotation différentielle n'a pas changé ; ledit moyen de réduction de la pression (956) est prévu pour réduire la pression de l'huile destinée à alimenter ledit servo-distributeur hydraulique (C-1) lorsque la décision est telle que ladite rotation différentielle a changé ; ledit moyen de conservation de la pression de base (958) est prévu pour stocker dans une unité de stockage (957) la pression d'huile avant sa réduction, à titre de pression de base, lorsque l'huile destinée à alimenter ledit servo-distributeur hydraulique (C-1) est soumise à une suralimentation de pression par ledit moyen de suralimentation de pression (955) et est ensuite soumise à une réduction par ledit moyen de réduction de la pression (956) ; et ledit premier moyen de suralimentation de pression de l'embrayage (959) ajoute une pression d'utilisation réglée à la pression de base.

**2.** Système de commande pour une transmission automatique selon la revendication 1, comprenant en outre un détecteur (46) de la température de l'huile pour détecter la température de l'huile de ladite transmission automatique,
dans lequel ledit moyen de conservation de la pression de base (958) est prévu pour la mise à jour de ladite pression de base lorsque ladite température d'huile est supérieure à une valeur prédéterminée, chaque fois que l'huile destinée à alimenter ledit servo-distributeur hydraulique (C-1) est soumise à une suralimentation de pression par ledit moyen de suralimentation de pression (955) puis, est soumise à une réduction de la pression par ledit moyen de réduction de la pression (956), et pour maintenir la pression de base conservée sans mise à jour dans ladite unité de stockage lorsque ladite température d'huile est inférieure à la valeur prédéterminée.

**3.** Système de commande pour une transmission automatique selon la revendication 1 ou 2,

dans lequel ledit moyen de décision de changement de rotation différentielle (954) décide si ladite rotation différentielle a changé ou non par rapport à une valeur prédéterminée,

dans lequel ledit moyen de suralimentation de pression (955) soumet à une suralimentation de pression l'huile destinée à alimenter ledit servo-distributeur hydraulique (C-1) si la décision est telle que ladite rotation différentielle n'a pas changé par rapport à ladite valeur prédéterminée, et

dans lequel ledit moyen de réduction de la pression (956) soumet à une réduction de la pression l'huile destinée à alimenter ledit servo-distributeur hydraulique (C-1) si la décision est telle que ladite rotation différentielle a changé par rapport à ladite valeur prédéterminée.

**4.** Système de commande pour une transmission automatique selon la revendication 1 ou 2,
dans lequel ledit moyen de décision de changement de la rotation différentielle (954) décide si ladite rotation différentielle a changé ou non à des intervalles de temps respectifs déterminés.

**5.** Système de commande pour une transmission automatique selon la revendication 1 ou 2,

dans lequel ledit moyen de décision de changement de la rotation différentielle (954) décide si ladite rotation différentielle a changé ou non par rapport à ladite valeur prédéterminée à des intervalles de temps respectifs déterminés,

dans lequel ledit moyen de suralimentation de pression (955) soumet à une suralimentation de pression l'huile destinée à alimenter ledit servo-distributeur hydraulique (C-1) si la décision est telle que ladite rotation différentielle n'a pas changé par rapport à ladite valeur prédéterminée, et

dans lequel ledit moyen de réduction de la pression (956) soumet à une réduction de la pression l'huile destinée à alimenter ledit servo-distributeur hydraulique (C-1) si la décision est telle que ladite rotation différentielle a changé par rapport à ladite valeur prédéterminée.

**6.** Système de commande pour une transmission automatique selon la revendication 1 ou 2,

dans lequel ledit moyen de décision de changement de la rotation différentielle (954) décide si ladite rotation différentielle a changé ou non à des intervalles de temps respectifs déterminés, et décide si ladite rotation différentielle a chuté lorsque ledit intervalle prédéterminé n'a pas été atteint, et

dans lequel ledit moyen de réduction de la pression (956) soumet à une réduction de la pression l'huile destinée à alimenter et ledit servo-distributeur hydraulique (C-1) même s'il décide que ladite rotation différentielle a chuté.

**7.** Système de commande pour une transmission automatique selon la revendication 1 ou 2,

dans lequel ledit moyen de décision de changement de la rotation différentielle (954) décide si ladite rotation différentielle a changé ou non par rapport à ladite valeur prédéterminée à des intervalles de temps respectifs déterminés, et décide si ladite rotation différentielle a chuté par rapport à ladite valeur prédéterminée lorsque ledit intervalle prédéterminée n'a pas été atteint,

dans lequel ledit moyen de suralimentation de pression (955) soumet à une suralimentation de pression l'huile destinée à alimenter ledit servo-distributeur hydraulique (C-1) si la décision est telle que ladite rotation différentielle n'a pas changé par rapport à ladite valeur prédéterminée, et

dans lequel ledit moyen de réduction de la pression (956) soumet à une réduction de la pression l'huile destinée à alimenter ledit servo-distributeur hydraulique (C-1) si la décision est telle que ladite rotation différentielle a changé par rapport à ladite valeur prédéterminée, et si la décision est telle que ladite rotation différentielle a chuté par rapport à ladite valeur prédéterminée.

**8.** Système de commande pour une transmission automatique selon l'une quelconque des revendications 1 à 7,
dans lequel ledit moyen d'établissement de l'état complètement embrayé (952) décide l'état partiellement embrayé dudit embrayage (C1) sur base du nombre de rotations par minute à la sortie de ladite unité de transmission de fluides (12).

**9.** Système de commande pour une transmission automatique selon l'une quelconque des revendications 1 à 8,
dans lequel ledit deuxième moyen (960) pour soumettre l'embrayage à une suralimentation de pression soumet progressivement à une suralimentation de pression l'huile destinée à alimenter ledit servo-distributeur hydraulique (C-1) jusqu'à ce que ledit embrayage (C1) passe de l'état partiellement embrayé à l'état complètement embrayé.

**10.** Système de commande pour une transmission automatique selon l'une quelconque des revendications 1 à 9,
dans lequel ledit moyen de détection de l'état d'arrêt (93) détecte que le véhicule est à l'état d'arrêt lorsque la vitesse du véhicule est essentiellement égale à zéro, lorsque la pédale d'accélérateur est relâchée et lorsque la pédale de frein est enfoncée.

**11.** Système de commande pour une transmission automatique selon l'une quelconque des revendications 1 à 10,
dans lequel ledit moyen de détection de l'état de démarrage (93) détecte le passage du véhicule de l'état d'arrêt à l'état de démarrage lorsque la vitesse du véhicule quitte essentiellement la valeur zéro, lorsque la pédale d'accélérateur est enfoncée ou lorsque la pédale de frein est relâchée.

FIG. 1

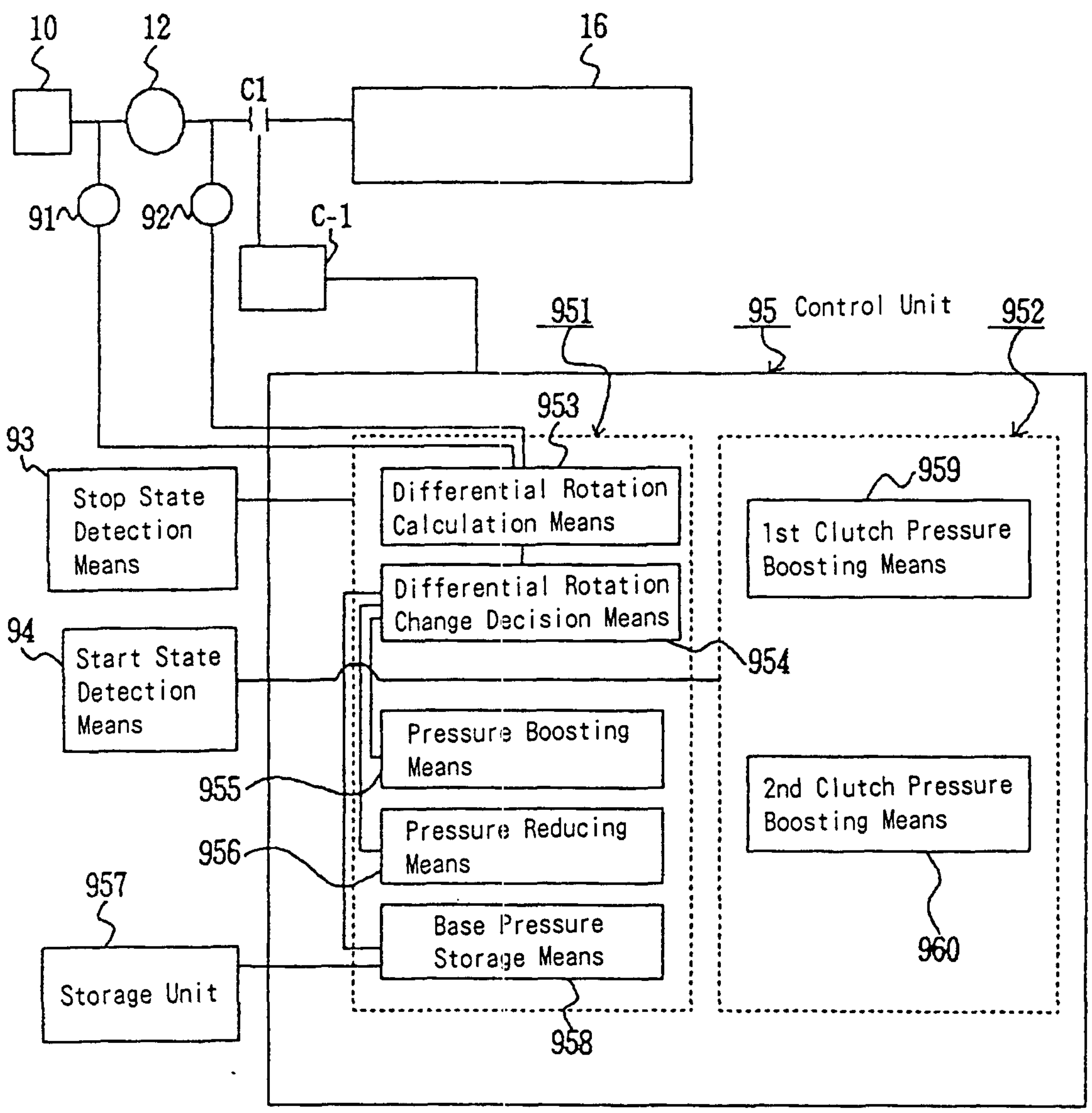
10
12
16
C1
91
92
C-1
951
95 Control Unit
952
953
93
Stop State Detection Means
Differential Rotation Calculation Means
959
1st Clutch Pressure Boosting Means
Differential Rotation Change Decision Means
94
954
Start State Detection Means
Pressure Boosting Means
955
2nd Clutch Pressure Boosting Means
Pressure Reducing Means
956
957
Base Pressure Storage Means
960
Storage Unit
958

FIG. 2

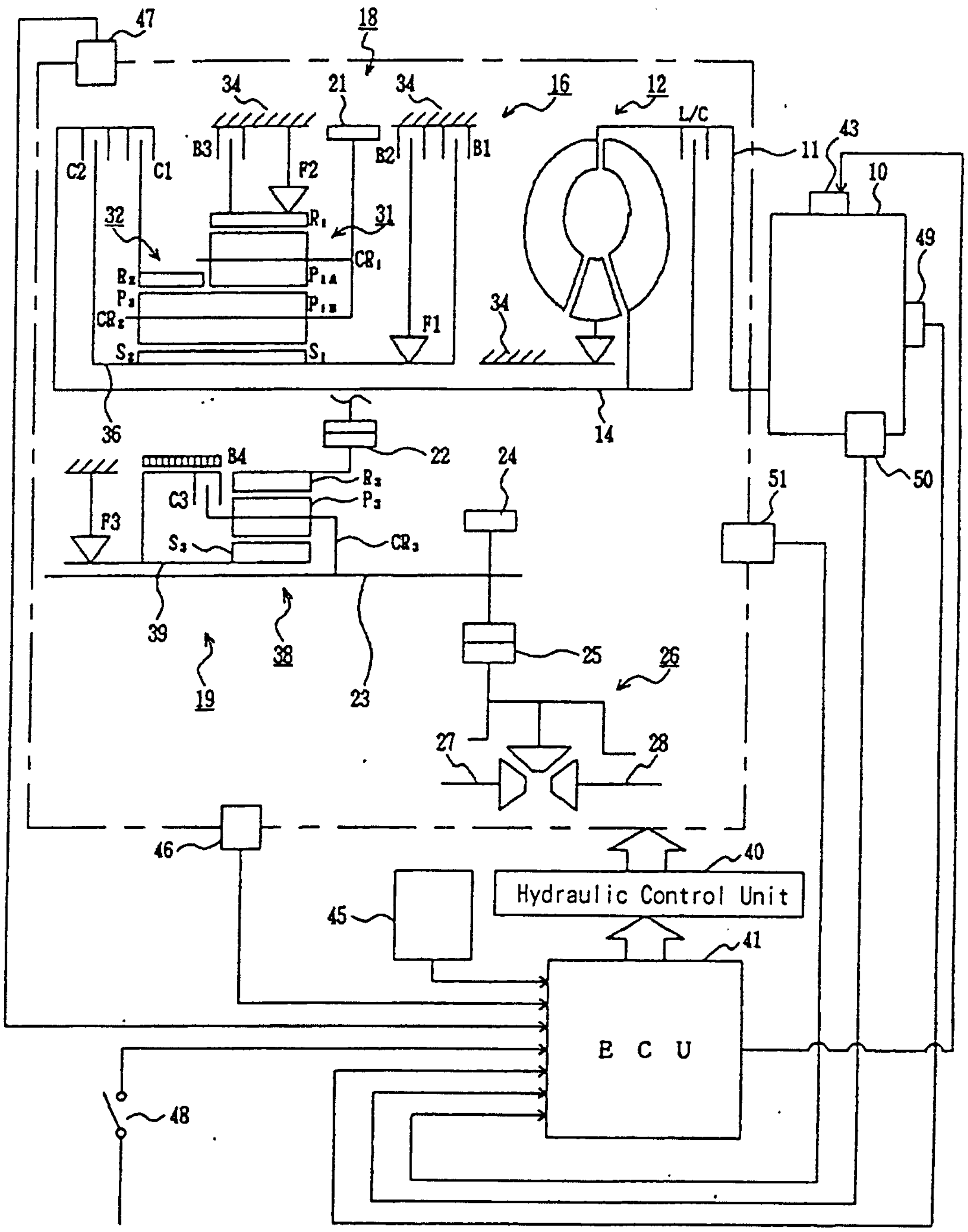
47
18
34
21
34
16
12
L/C
B3
B2
B1
11
43
10
C2
C1
F2
32
31
49
34
F1
36
14
22
24
B4
F3
C3
51
50
39
38
23
25
26
19
27
28
46
40
Hydraulic Control Unit
45
41
E C U
48

# FIG. 3

| | | SOLENOID | | | CLUTCH | | | BRAKE | | | | ONE-WAY CLUTCH | | |
|---|---|---|---|---|---|---|---|---|---|---|---|---|---|---|
| | | S1 | S2 | S3 | C1 | C2 | C3 | B1 | B2 | B3 | B4 | F1 | F2 | F3 |
| R | | × | ○ | × | × | ○ | × | × | × | ○ | ○ | × | × | × |
| N | | × | ○ | × | × | × | × | × | × | × | ○ | × | × | × |
| D | 1 ST | × | ○ | △ | ○ | × | × | × | × | (○) | ○ | × | ○ | ○ |
| | 2 ND | ○ | ○ | △ | ○ | × | × | ○ | ○ | × | ○ | ○ | × | ○ |
| | 3 RD | ○ | × | × | ○ | × | ○ | ○ | ○ | × | × | ○ | × | × |
| | 4 TH | × | × | × | ○ | ○ | ○ | × | ○ | × | × | × | × | × |

FIG. 4

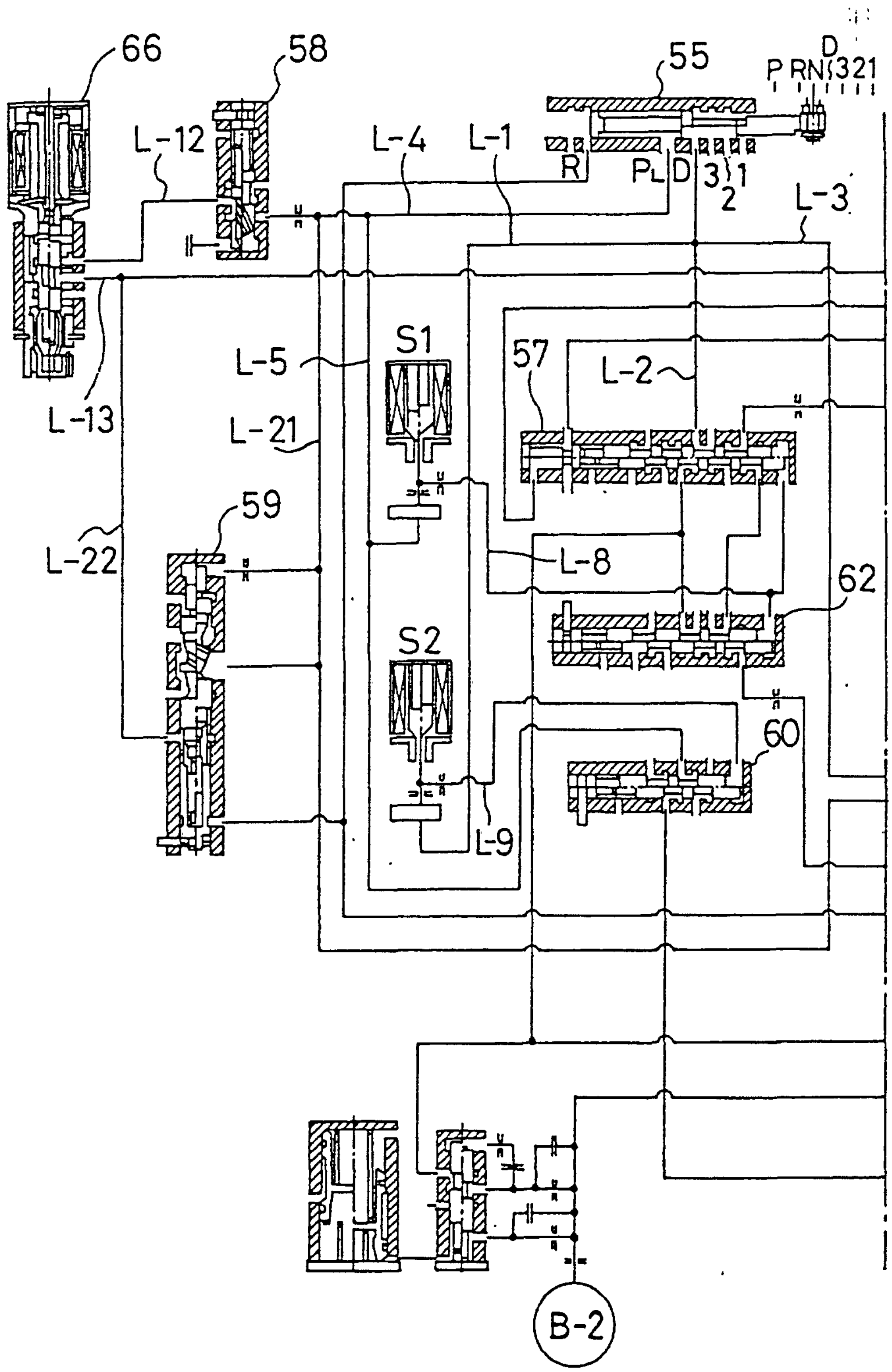
66
58
55
P RN D 3 2 1
L-12
L-4
L-1
R
PL D 3 2 1
L-3
L-13
L-5
S1
57
L-2
L-21
L-22
59
L-8
62
S2
60
L-9
B-2

FIG. 5

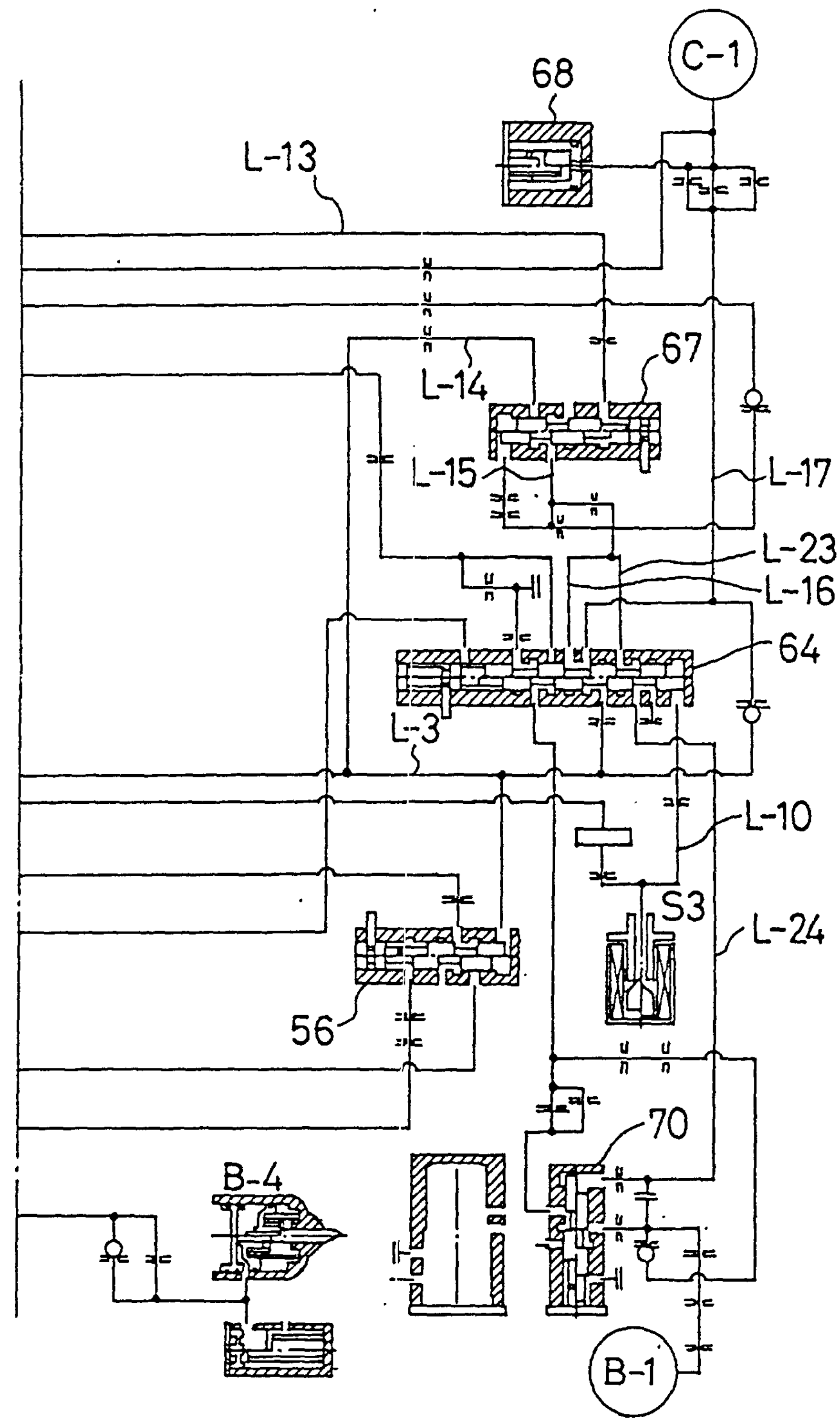

FIG. 6

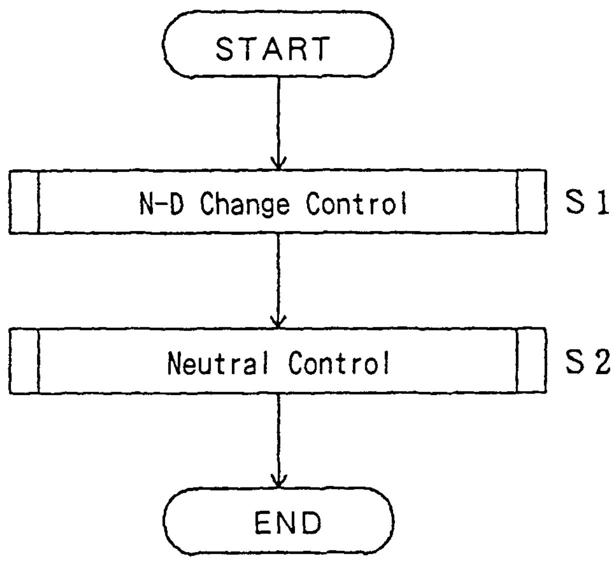

FIG. 7

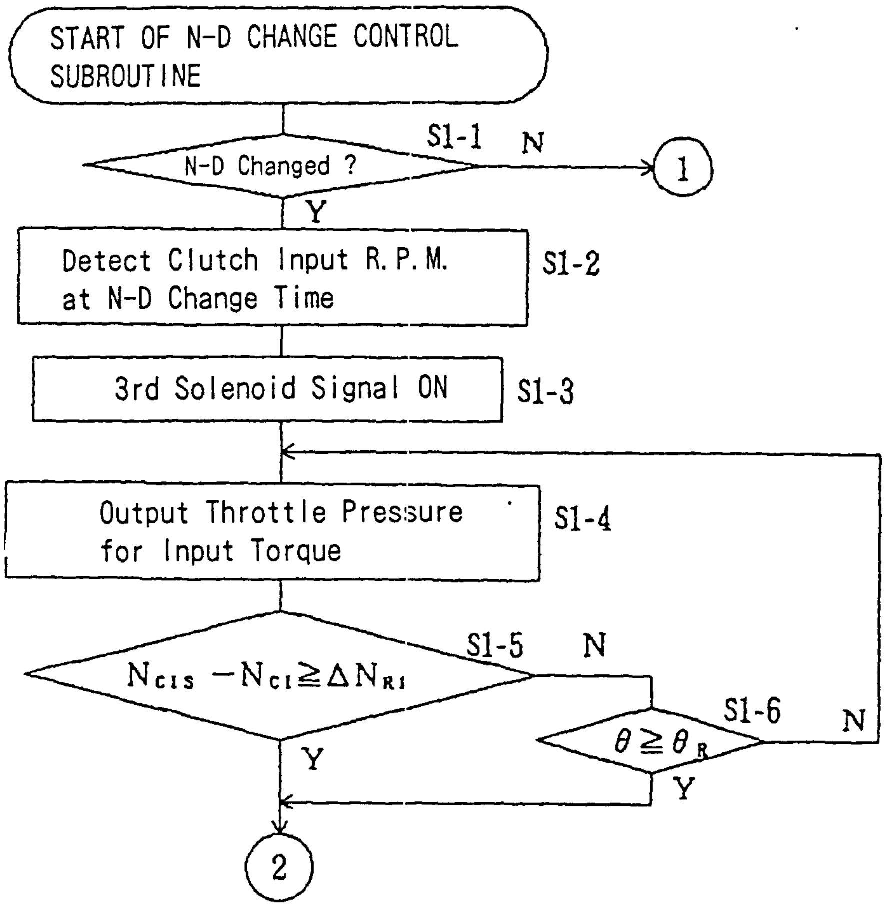
START OF N-D CHANGE CONTROL SUBROUTINE
N-D Changed ?
S1-1
N
1
Y
Detect Clutch Input R.P.M. at N-D Change Time
S1-2
3rd Solenoid Signal ON
S1-3
Output Throttle Pressure for Input Torque
S1-4
$N_{CIS} - N_{CI} \geqq \Delta N_{RI}$
S1-5
N
Y
$\theta \geqq \theta_R$
S1-6
N
Y
2

FIG. 8

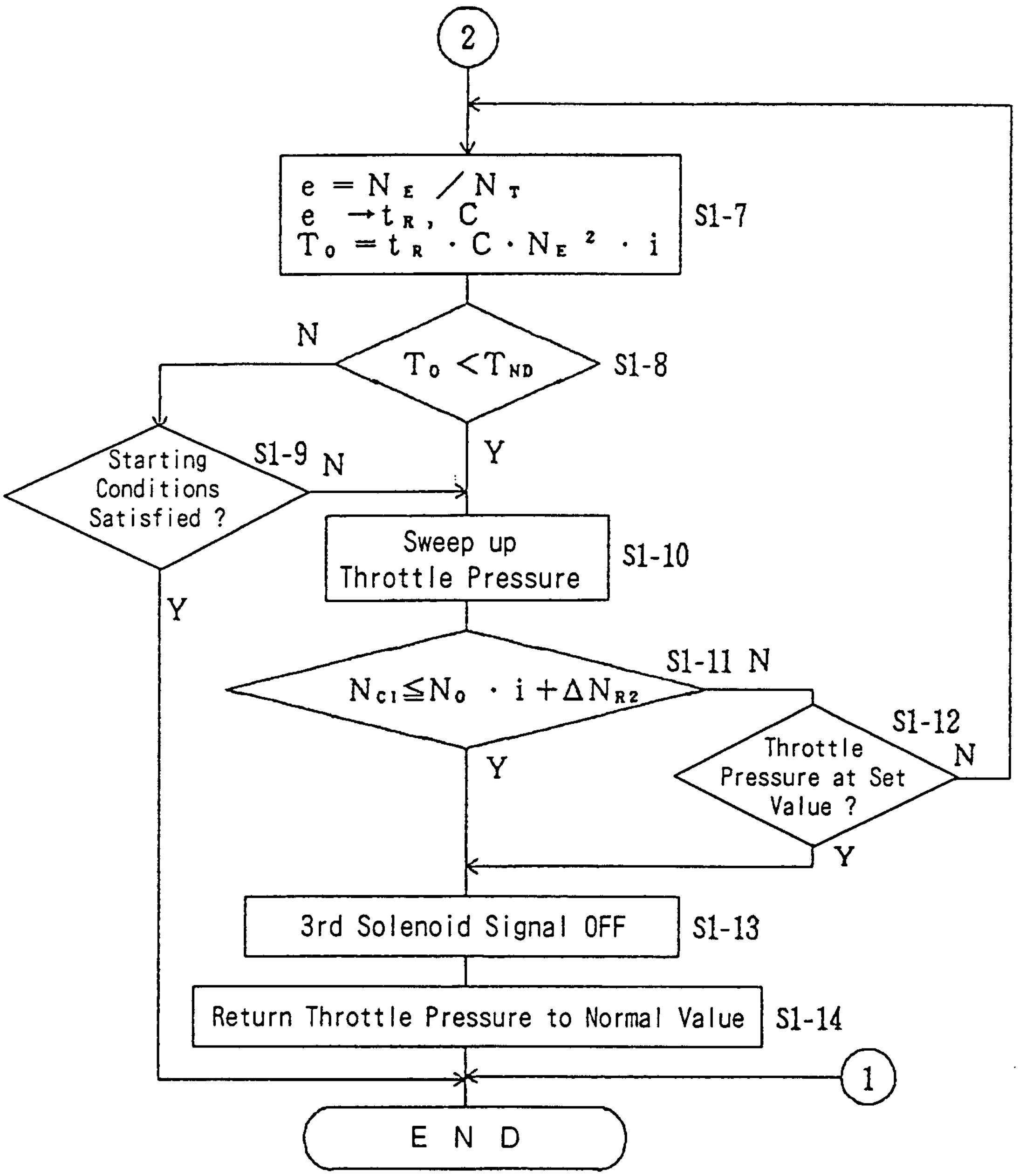
2
e = N_E / N_T
e → t_R, C
T_0 = t_R · C · N_E^2 · i
S1-7
N
T_0 < T_ND
S1-8
Y
Starting Conditions Satisfied ?
S1-9
N
Y
Sweep up Throttle Pressure
S1-10
N_C1 ≦ N_0 · i + ΔN_R2
S1-11
N
Y
Throttle Pressure at Set Value ?
S1-12
N
Y
3rd Solenoid Signal OFF
S1-13
Return Throttle Pressure to Normal Value
S1-14
1
E N D

FIG. 9

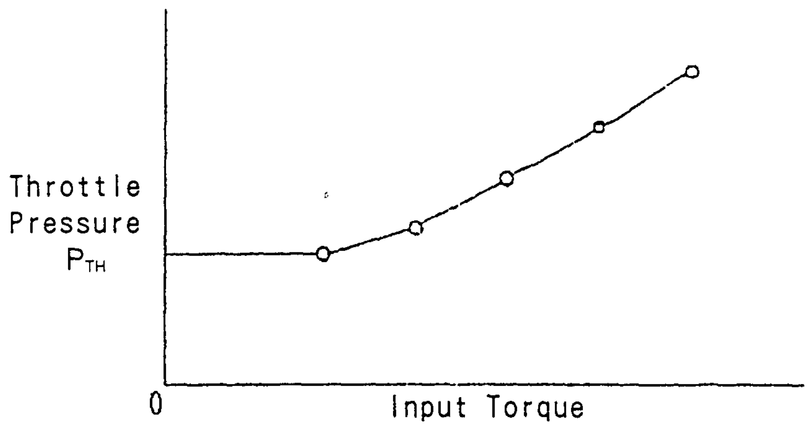


FIG. 10

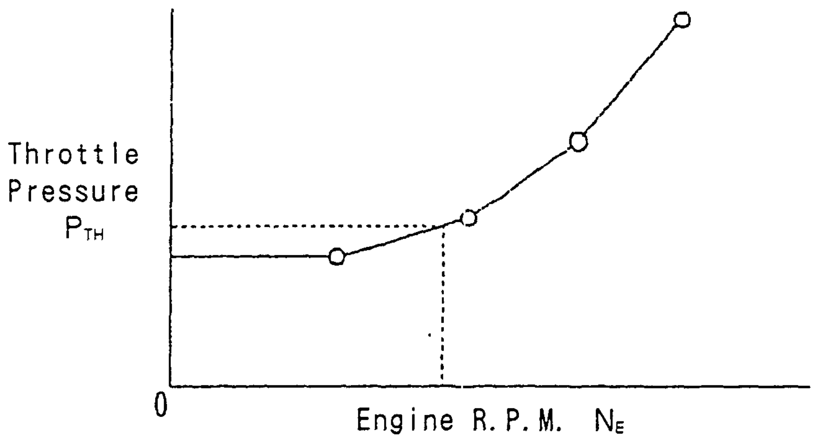


FIG. 11

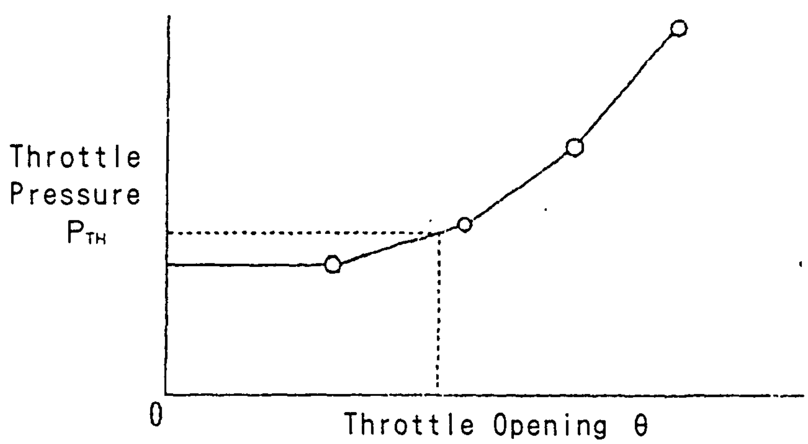

FIG. 12

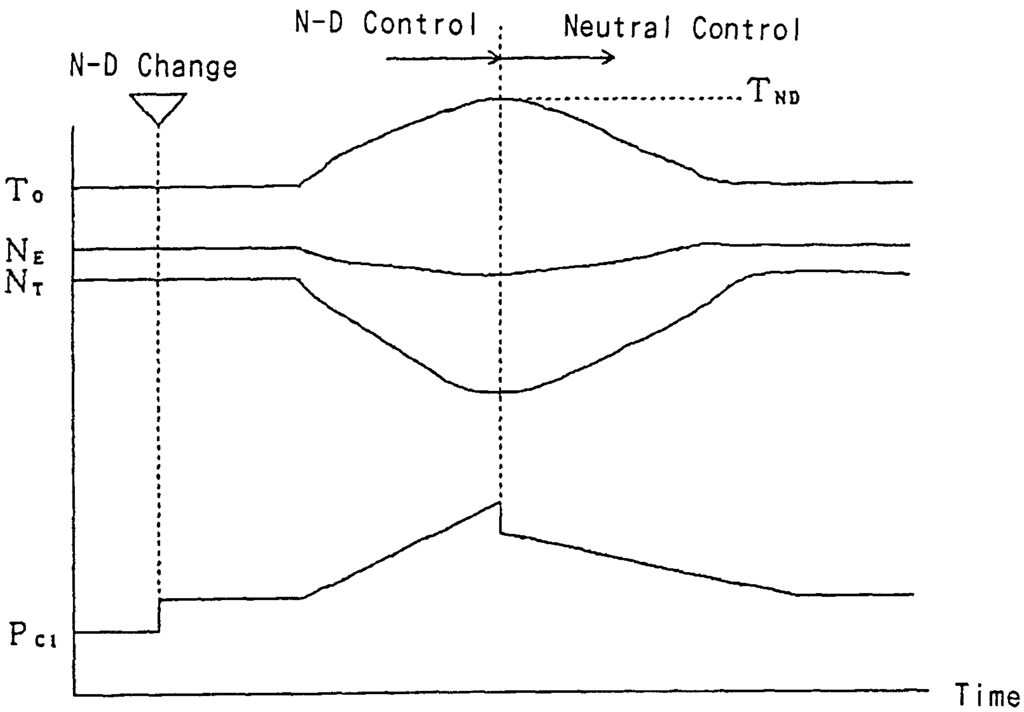

FIG. 13

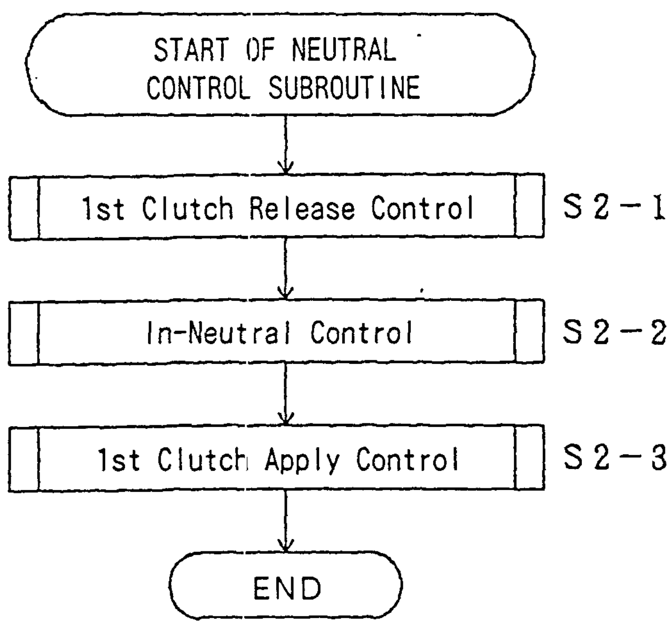
START OF NEUTRAL
CONTROL SUBROUTINE
1st Clutch Release Control
S2-1
In-Neutral Control
S2-2
1st Clutch Apply Control
S2-3
END

FIG. 14

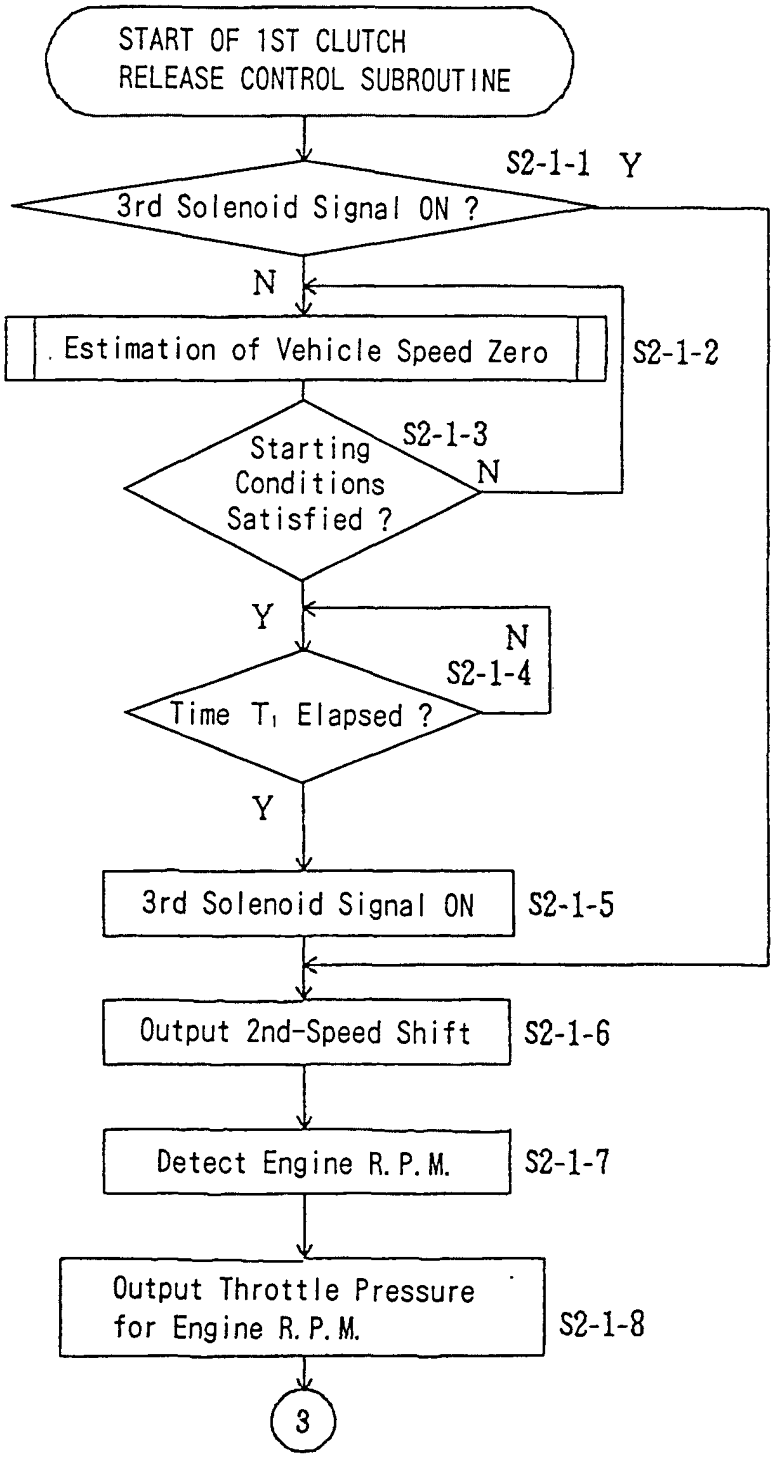
START OF 1ST CLUTCH
RELEASE CONTROL SUBROUTINE
S2-1-1
3rd Solenoid Signal ON ?
Y
N
Estimation of Vehicle Speed Zero
S2-1-2
Starting
Conditions
Satisfied ?
S2-1-3
N
Y
N
S2-1-4
Time $T_1$ Elapsed ?
Y
3rd Solenoid Signal ON
S2-1-5
Output 2nd-Speed Shift
S2-1-6
Detect Engine R.P.M.
S2-1-7
Output Throttle Pressure
for Engine R.P.M.
S2-1-8
3

FIG. 15

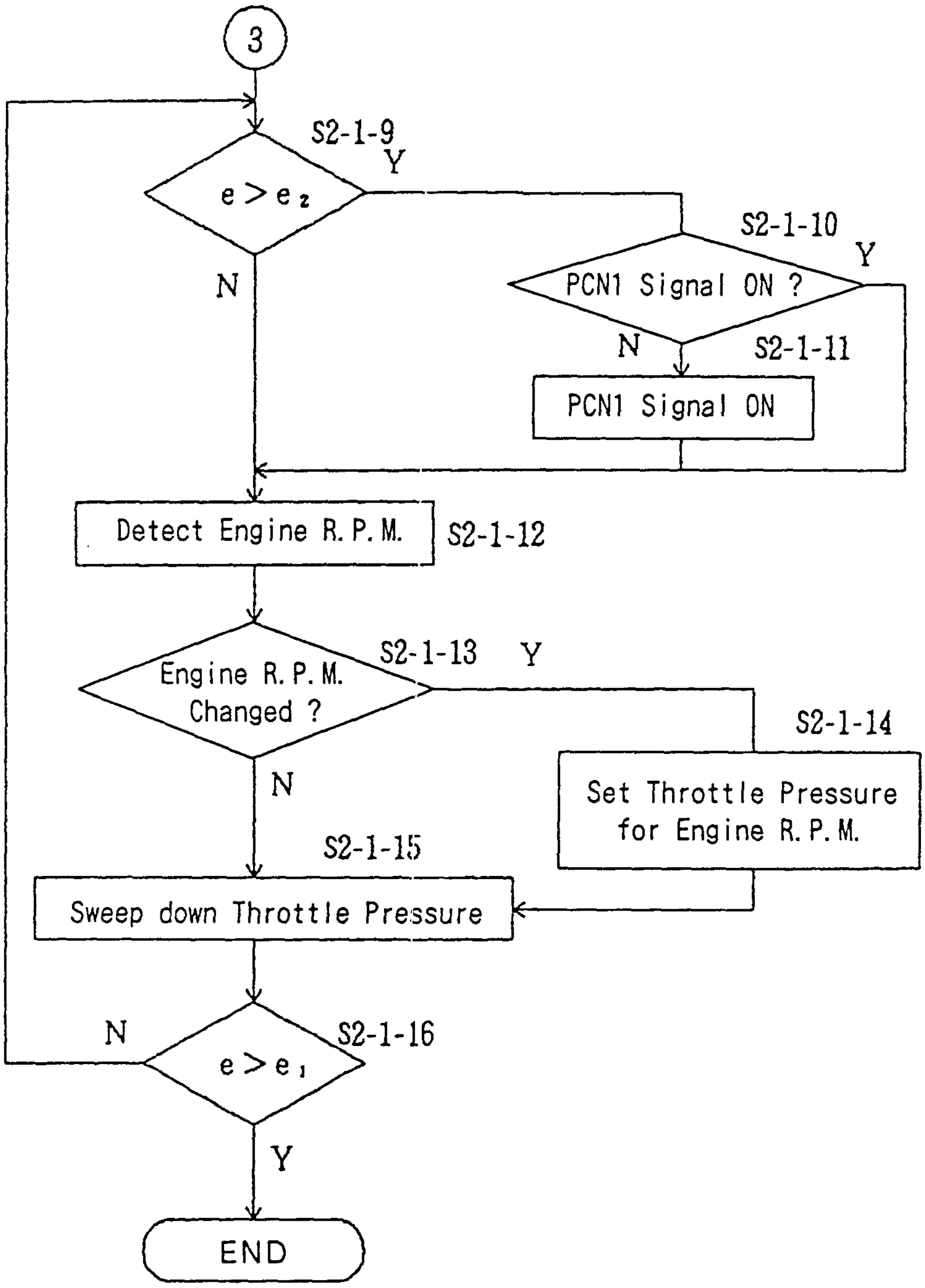

3
S2-1-9
e > $e_2$
Y
N
S2-1-10
PCN1 Signal ON ?
Y
N
S2-1-11
PCN1 Signal ON
Detect Engine R. P. M.
S2-1-12
Engine R. P. M. Changed ?
S2-1-13
Y
N
S2-1-14
Set Throttle Pressure for Engine R. P. M.
S2-1-15
Sweep down Throttle Pressure
N
S2-1-16
e > $e_1$
Y
END

FIG. 16

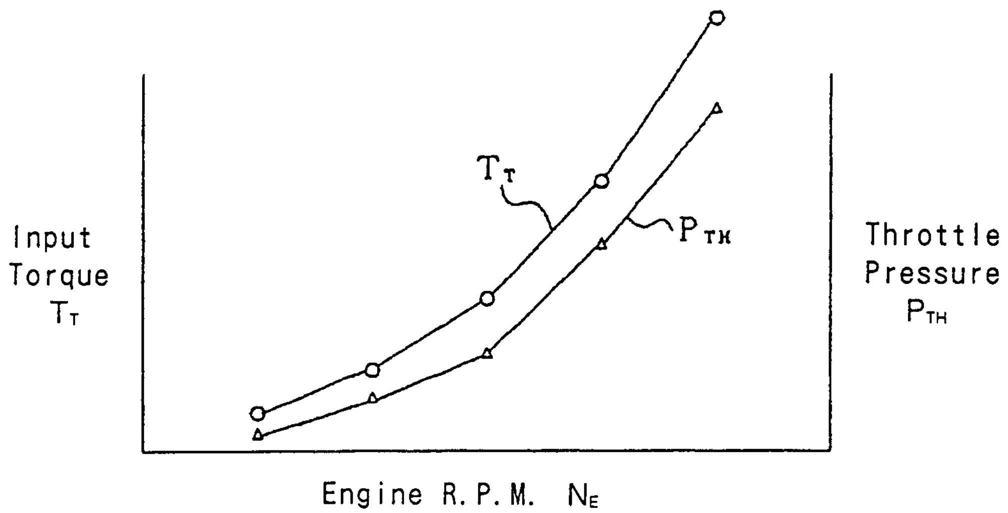

FIG. 17

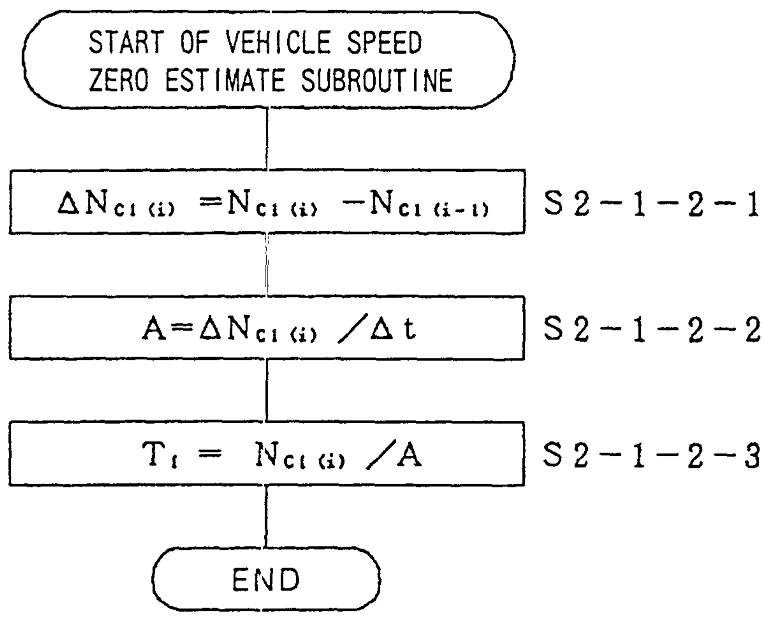

START OF VEHICLE SPEED ZERO ESTIMATE SUBROUTINE
$\Delta N_{C1(i)} = N_{C1(i)} - N_{C1(i-1)}$
S2-1-2-1
$A = \Delta N_{C1(i)} / \Delta t$
S2-1-2-2
$T_1 = N_{C1(i)} / A$
S2-1-2-3
END

FIG. 18

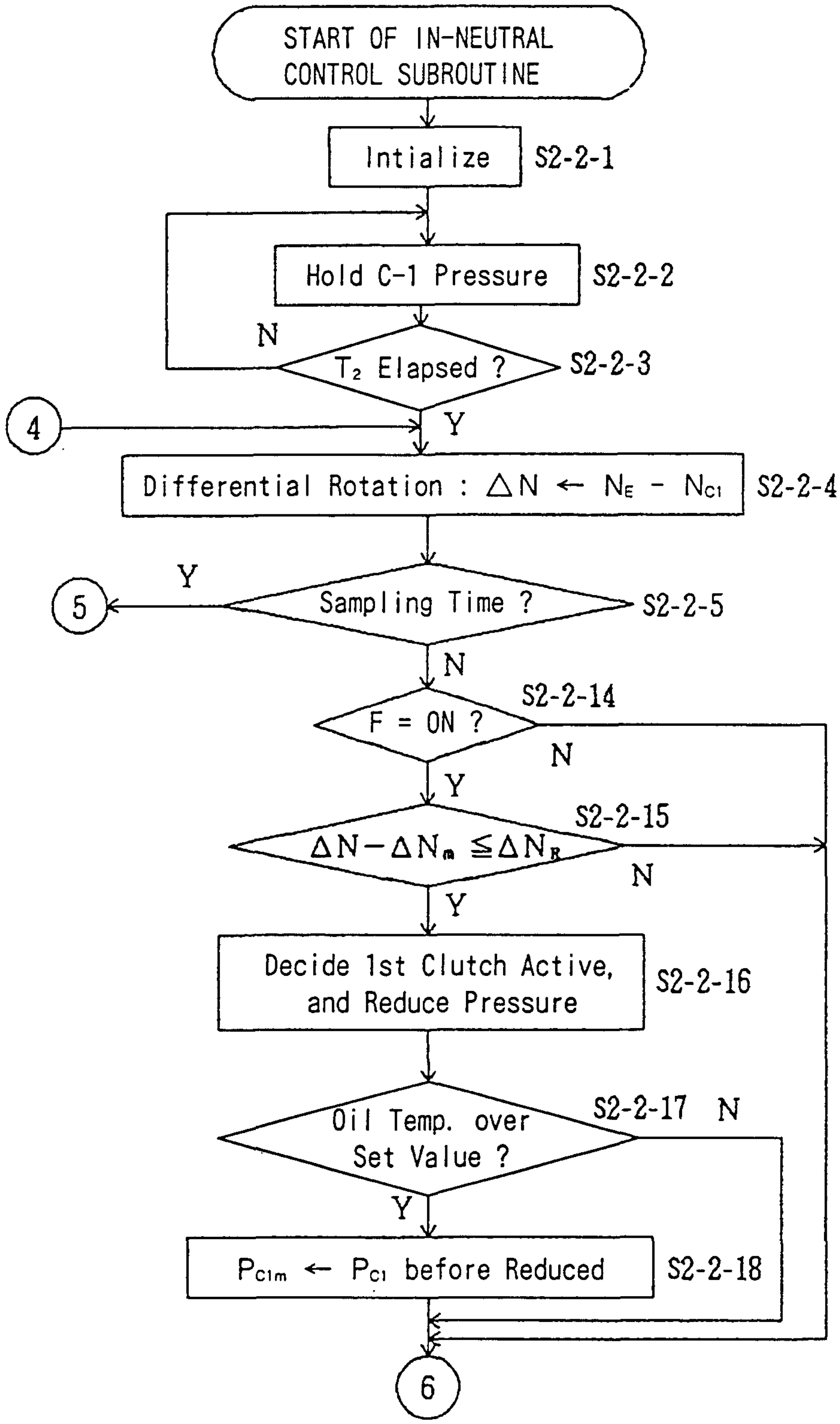
START OF IN-NEUTRAL CONTROL SUBROUTINE
Intialize
S2-2-1
Hold C-1 Pressure
S2-2-2
N
T2 Elapsed ?
S2-2-3
4
Y
Differential Rotation : ΔN ← NE - NC1
S2-2-4
Y
5
Sampling Time ?
S2-2-5
N
S2-2-14
F = ON ?
N
Y
S2-2-15
ΔN−ΔNm ≦ΔNR
N
Y
Decide 1st Clutch Active, and Reduce Pressure
S2-2-16
Oil Temp. over Set Value ?
S2-2-17
N
Y
PC1m ← PC1 before Reduced
S2-2-18
6

FIG. 19

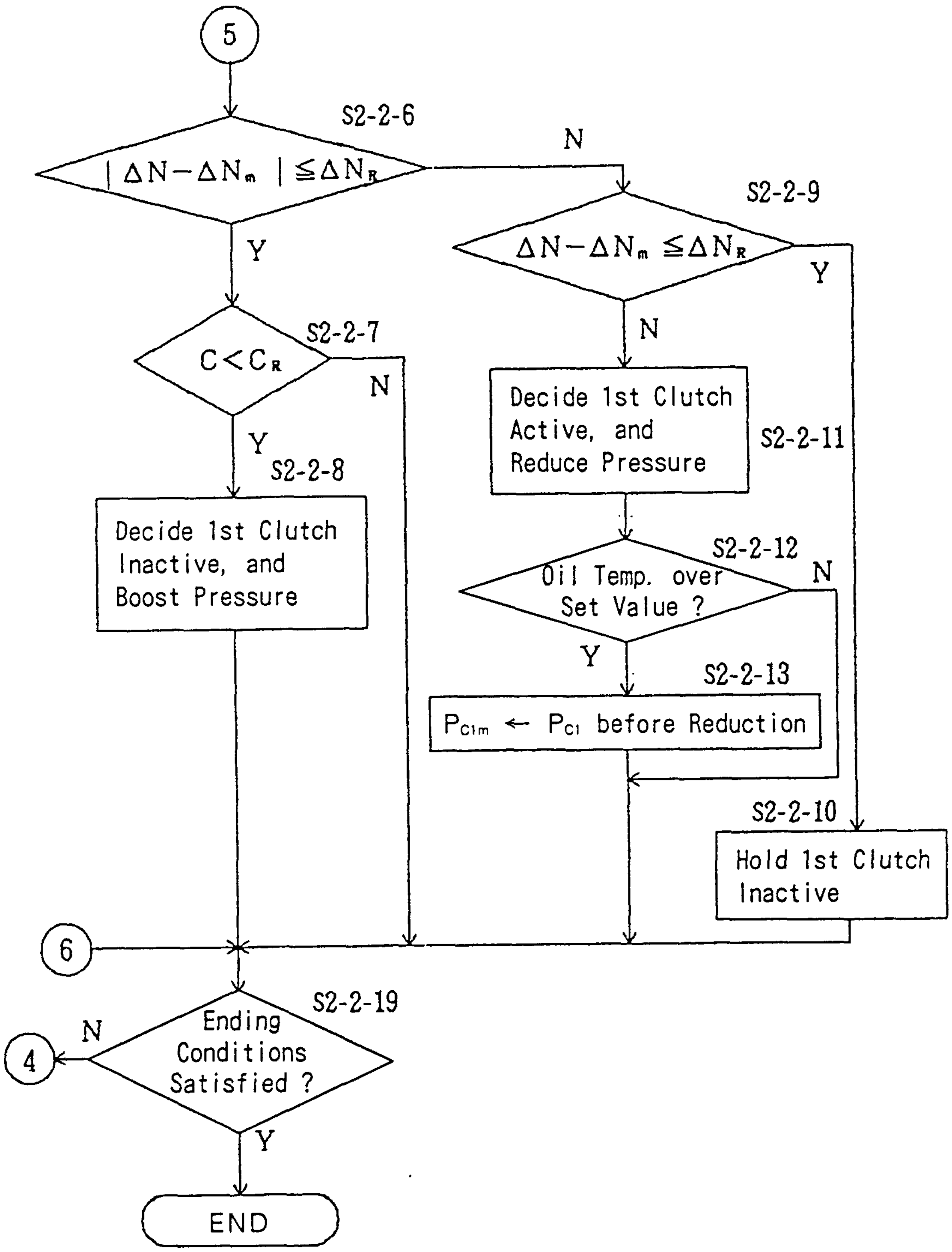

5
S2-2-6
| ΔN−ΔNm | ≦ΔNR
N
Y
S2-2-9
ΔN−ΔNm ≦ΔNR
Y
S2-2-7
C<CR
N
Y
S2-2-8
Decide 1st Clutch Inactive, and Boost Pressure
N
Decide 1st Clutch Active, and Reduce Pressure
S2-2-11
S2-2-12
Oil Temp. over Set Value ?
N
Y
S2-2-13
PC1m ← PC1 before Reduction
S2-2-10
Hold 1st Clutch Inactive
6
S2-2-19
N
4
Ending Conditions Satisfied ?
Y
END

FIG. 20

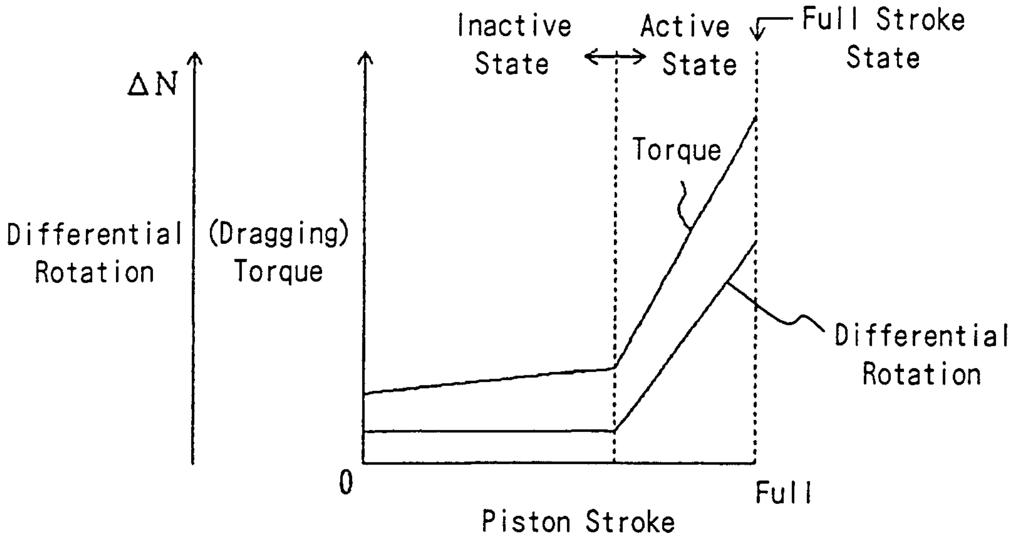


FIG. 21

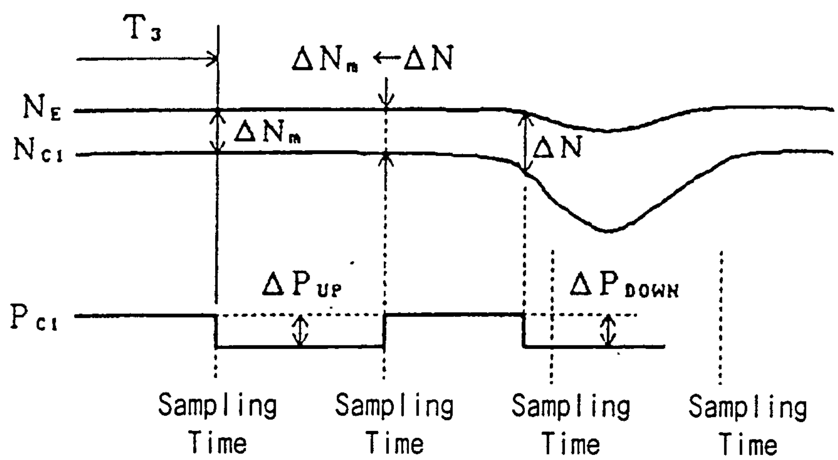


FIG. 22

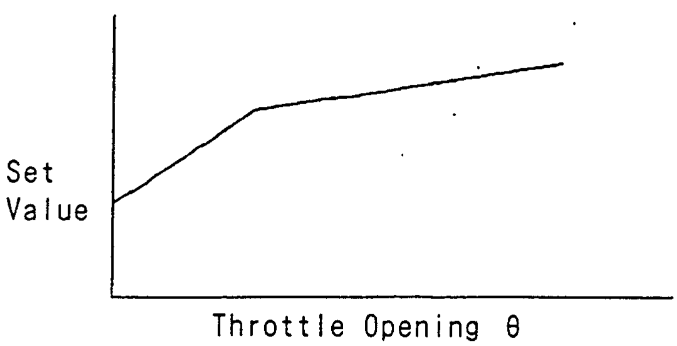

FIG. 23

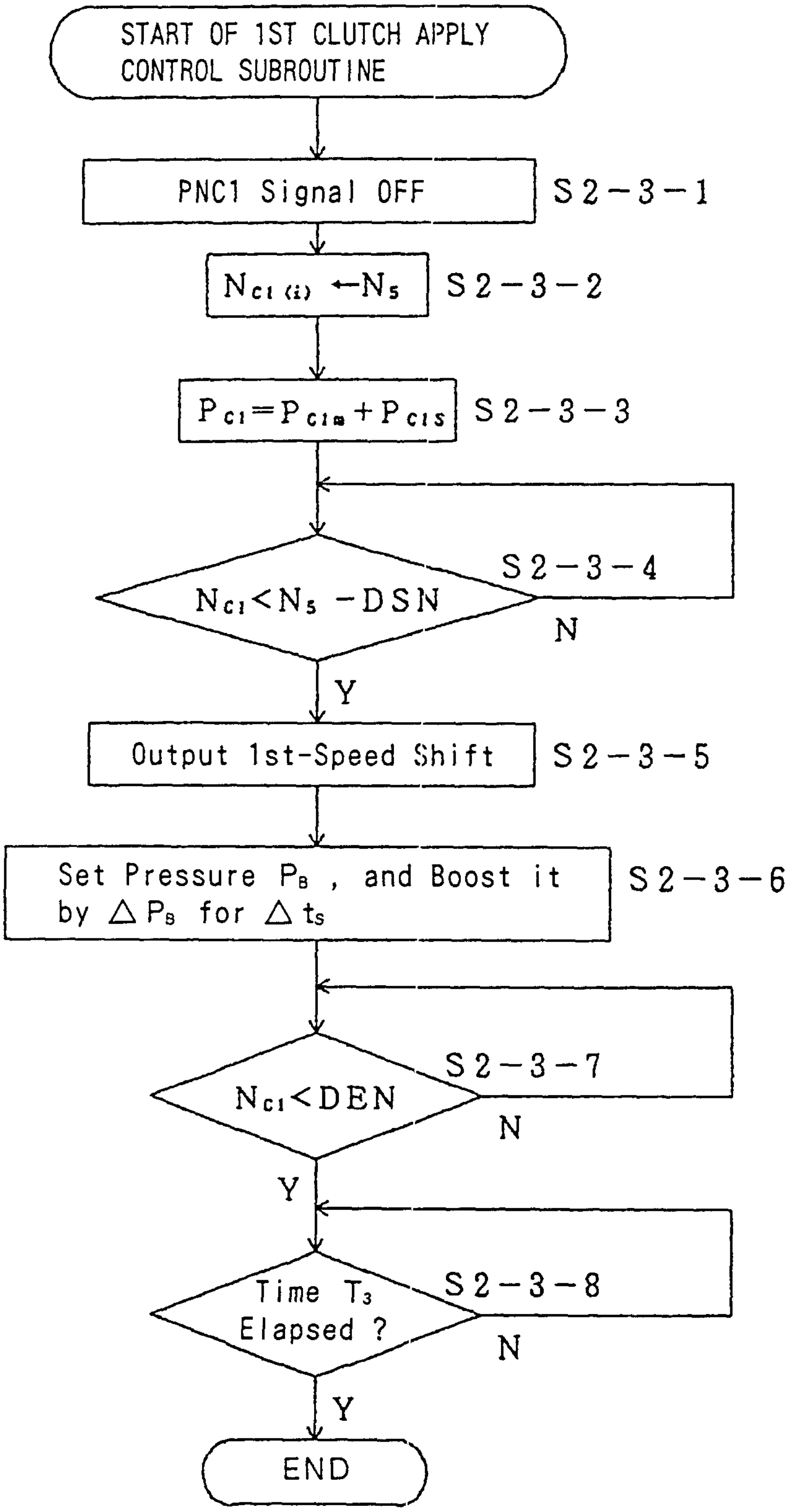
START OF 1ST CLUTCH APPLY CONTROL SUBROUTINE
PNC1 Signal OFF
S2-3-1
NC1(i) ←NS
S2-3-2
PC1=PC1m+PC1S
S2-3-3
NC1<NS -DSN
S2-3-4
N
Y
Output 1st-Speed Shift
S2-3-5
Set Pressure PB , and Boost it by △PB for △tS
S2-3-6
NC1<DEN
S2-3-7
N
Y
Time T3 Elapsed ?
S2-3-8
N
Y
END

FIG. 24

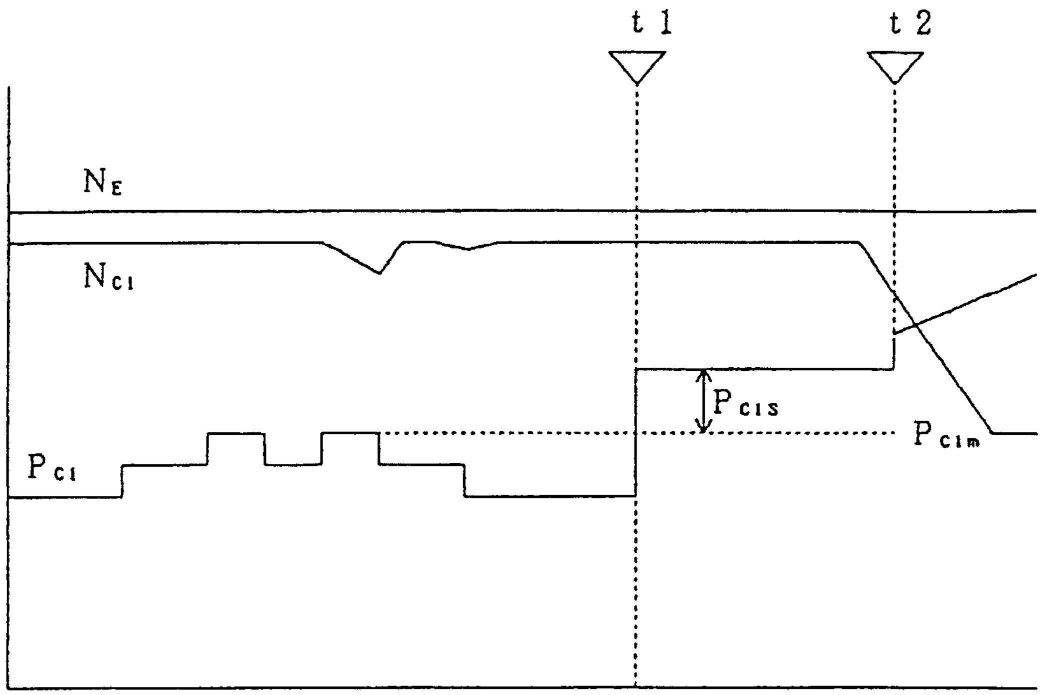

FIG. 25

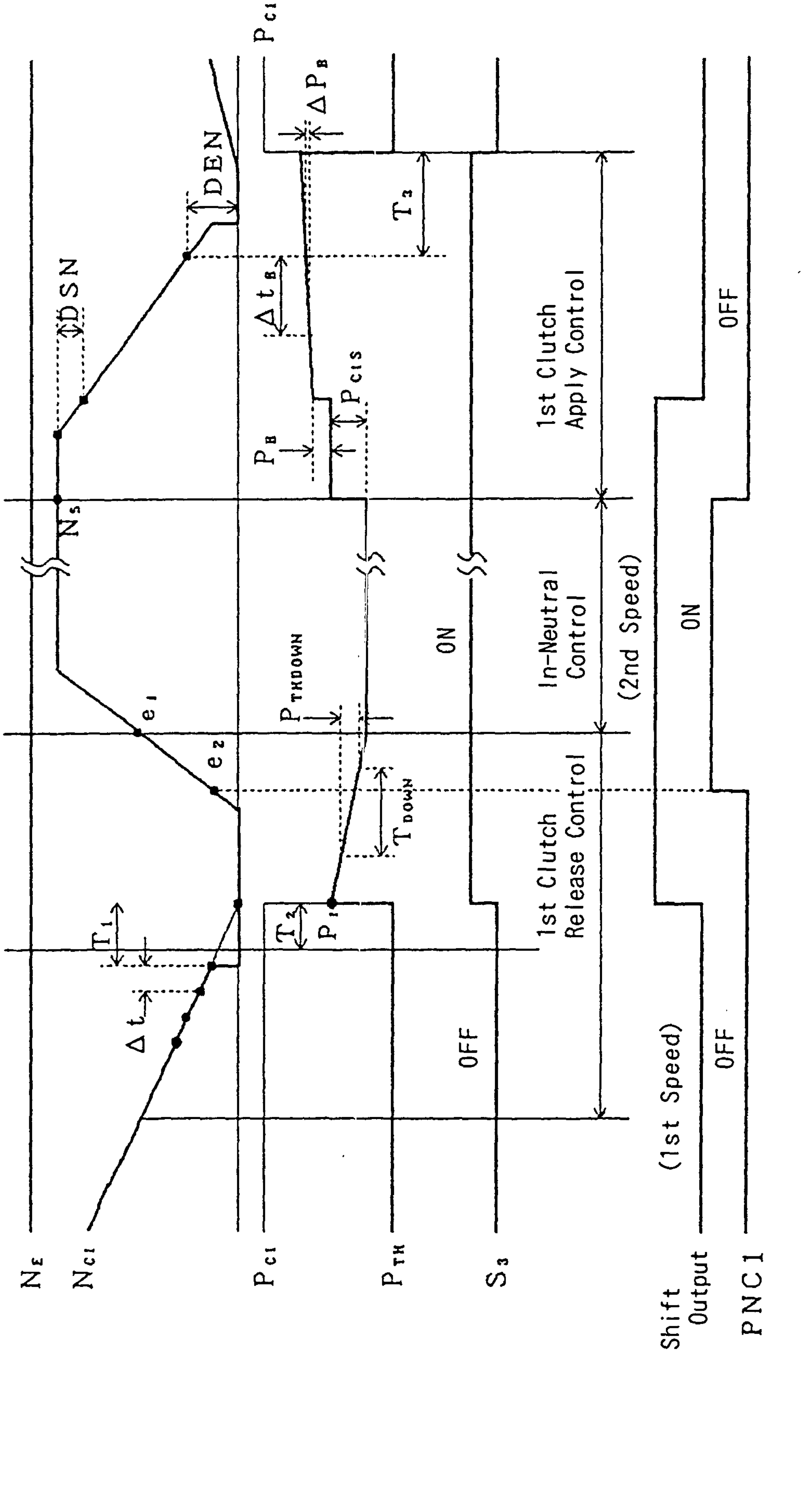
N E
N C1
P C1
P TH
S 3
Shift Output
PNC1
Δt
T 1
T 2
P 1
T DOWN
P THDOWN
e 1
e 2
N S
DSN
DEN
P B
P C1S
Δt B
T 3
ΔP B
OFF
ON
1st Clutch Release Control
In-Neutral Control
1st Clutch Apply Control
(1st Speed)
(2nd Speed)